# EUROPÄISCHE PATENTSCHRIFT

(11) **EP 2 134 522 B1**
(45) Veröffentlichungstag und Bekanntmachung des Hinweises auf die Patenterteilung: **01.03.2017**
(21) Anmeldenummer: 08717791.1
(22) Anmeldetag: 13.03.2008
(51) Int. Cl.: B29B 11/16, B29C 70/38, D02J 1/18, B65H 51/005, B29C 70/54, B29C 70/20, D04H 3/002, D04H 3/04, D04H 13/00, B65H 49/18, B65H 57/16, D04H 1/60, D04H 1/655, D04H 1/4242, D04H 3/12

(54) **VERFAHREN UND VORRICHTUNG ZUM HERSTELLEN EINER PREFORM FÜR EINE KRAFTFLUSSGERECHTE FASERVERBUNDSTRUKTUR**
METHOD AND DEVICE FOR PRODUCING A PREFORM FOR A FIBRE COMPOSITE STRUCTURE SUITABLE FOR POWER FLOWS
PROCÉDÉ ET DISPOSITIF DE FABRICATION D'UNE PRÉFORME POUR UNE STRUCTURE EN MATÉRIAU RENFORCÉ PAR DES FIBRES ADAPTÉE À DES FLUX DE FORCES

(30) Priorität: 13.03.2007 DE 102007012608; 03.03.2008 DE 102008012255
(43) Veröffentlichungstag der Anmeldung: 23.12.2009
(73) Patentinhaber: Airbus Defence and Space GmbH, 85521 Ottobrunn (DE)
(72) Erfinder: GESSLER, Andreas, 85540 Haar (DE); MEYER, Oliver, 85521 Ottobrunn (DE)
(74) Vertreter: Kastel, Stefan
(86) Internationale Anmeldenummer: PCT/EP2008/053047
(87) Internationale Veröffentlichungsnummer: WO 2008/110614

(56) Entgegenhaltungen:
- EP-A- 0 511 937
- EP-A- 1 749 631
- WO-A-2004/030897
- DE-A1-102006 025 280
- FR-A- 2 148 729

## Beschreibung

Die Erfindung betrifft ein Verfahren zum Herstellen einer Preform für eine kraftflussgerechte Faserverbundstruktur. Weiter betrifft die Erfindung die Verwendung eines solchen Verfahrens bei der Herstellung kraftflussgerechter Faserverbundstrukturen. Schließlich betrifft die Erfindung eine Vorrichtung zur Durchführung des Verfahrens.

Beim Bau von Fahrzeugen aller Art, insbesondere beim Bau von Luft- und Raumfahrtgeräten, aber auch in anderen Industriezweigen, wie im Maschinenbau, gibt es immer mehr das Bedürfnis nach belastbaren und dennoch leichtgewichtigen und möglichst kostengünstigen Materialien. Insbesondere Faserverbundwerkstoffe bieten ein überragendes Leichtbaupotential. Das Prinzip besteht darin, dass insbesondere hochfeste und steife Fasern belastungsgerecht in einer Matrix eingebettet werden, wodurch Bauteile mit herausragenden mechanischen Eigenschaften entstehen, die mit bisherigen Techniken typischerweise 25% leichter als Aluminium und 50% leichter als Stahlstrukturen mit vergleichbarer Leistungsfähigkeit sind. Ein Nachteil liegt in den hohen Werkstoffkosten und insbesondere in der aufwändigen, größtenteils manuellen Fertigung.

Es gibt daher den Wunsch, eine automatisierte Herstellung zu schaffen, die eine maschinelle Anordnung der Fasern im Raum ermöglicht. Heutzutage zeichnen sich faserverstärkte Kunststoffe insbesondere bei Verwendung von gerichteten Langfasern, zum Beispiel Kohlenstofffasern, durch eine sehr hohe Festigkeit und Steifigkeit bei geringem Gewicht aus. Außerdem verfügen sie über ein hohes gewichtsspezifisches Energieaufnahmevermögen und gute Ermüdungseigenschaften.

Dies wird bislang dadurch erreicht, dass Endlosfasern belastungsgerecht in einer Matrix (beispielsweise Epoxidharz) eingefügt werden. Je nach Verstärkungsrichtung können anisotrope Werkstoffe entstehen, die richtungsabhängige mechanische Eigenschaften haben. So kann zum Beispiel ein Werkstoff in der Länge andere Eigenschaften aufweisen als in der Breite. Bei modernen Luft- und Raumfahrzeugen besteht bereits heutzutage ein hoher Prozentsatz des Strukturgewichtes aus faserverstärkten Kunststoffen.

Das wichtigste Fertigungsverfahren basiert derzeit auf der sogenannten Prepreg-Technologie. Hierbei werden die Verstärkungsfasern parallel (unidirektional) angeordnet und in eine Matrix eingebettet. Nach einem Aushärtungsschritt entstehen Halbzeuge, die als dünne Lage auf eine Rolle aufgewickelt werden. Bei der Verarbeitung werden diese Lagen entsprechend der Bauteilkontur zugeschnitten und vorwiegend von Hand Schicht für Schicht in ein Werkzeug laminiert. Anschließend erfolgt die Aushärtung unter Druck und Temperatur in einem Autoklaven. Die entstehenden Bauteile weisen ein sehr hohes Leichtbaupotential auf, die Fertigung ist jedoch sehr aufwändig und teuer. Seit mehreren Jahrzehnten beschäftigt die Werkstoff-Forscher daher die Frage, wie Fasern belastungsgerecht, dreidimensional und von ihrer Kontur her möglichst nahe an der endgültigen Kontur des Bauteiles in einem automatisierten Prozess angeordnet werden können.

Um Faserverbundstrukturen mit entsprechend dem Kraftfluss angeordneten Fasern herzustellen, hat man bisher neben Prepregs für ausgewählte Anwendungen sogenannte Preforms als textile Halbzeuge gefertigt. Dabei handelt es sich um meist zwei- oder dreidimensionale Gebilde mit belastungsgerecht ausgelegter Faserausrichtung. Bisher werden hierzu mit Mitteln der Textiltechnik Endlosfasern in Belastungsrichtung verlegt und mit Mitteln der Textiltechnik, in der Regel durch Vernähen, Stricktechniken oder dergleichen, vorfixiert. Beispiele für Vorrichtungen und Verfahren zum Herstellen solcher Preforms finden sich in der DE 30 03 666 A1, der DE 196 24 912, der DE 197 26 831 A1 sowie der DE 100 05 202 A1.

Aus der US 4,952,366 A1 ist ein vergleichbares Verfahren zum Herstellen einer Preform sowie einer Verbundstruktur daraus bekannt, wobei zum Herstellen der Preform ein Prepreg mit einer Endlosfaser verstärkt wird. Die Endlosfaser wird an dem Prepreg bei dessen Transport zunächst mit einer Vakuumansaugung fixiert. Ein Transport von Fasergelegen auf einem Transportband derart, dass diese Fasergelege mittels Vakuum angesaugt werden, ist somit aus diesem Stand der Technik bekannt.

Aus der DE 30 48 367 C1 sind ein Verfahren und eine Vorrichtung zum Ausbreiten eines Faserstranges bekannt. Hierbei dringt eine konvexe Oberfläche in den Faserstrang ein und fächert diesen möglichst breit auf.

Aus der CH 450239 sind ebenfalls ein Verfahren und eine Vorrichtung zur Ausbreitung eines Faserstranges bekannt. Hierbei wird der Faserstrang über feste Leisten mäanderförmig geführt. Eine Führungsfläche der Leiste ist dabei bogenförmig konvex gekrümmt.

Aus der US 2002/0123819 A1 ist ein System zur automatischen Steuerung des Aufspreizens einer Textillage bekannt, welche Textillage aus einer Mehrzahl von Fasersträngen gebildet ist. Dieses System hat eine Messeinrichtung zum Messen der Positionen der Längskanten jedes Faserstranges, eine Breiteneinstelleinrichtung zum individuellen Einstellen der Breite jedes Faserstranges, eine Positionseinstelleinrichtung zum Einstellen der Position jedes Seiles und eine Steuereinrichtung zum Steuern des Aufspreizvorganges in der Art, dass die Textillage eine vorbestimmte Breite und Position hat. Die Faserstränge werden dabei über gekrümmte Stangen gezogen.

Aus der DE 695 00 513 T2 ist ein segmentierter Faserlegekopf zum Verlegen und Anpressen von Fasersträngen an eine Vorform bekannt. Durch die Segmentierung ist der Faserlegekopf elastisch, so dass die Anpresskräfte besser an unregelmäßige Formen anpassbar sind. Der Legekopf hat eine Andrückrolle, mittels welcher einzelne lange Faserstränge an die Vorform angepresst werden können. Zum Bilden des segmentierten Faserlegekopfes ist diese Anpressrolle aus vielen Einzelscheiben gebildet. Zu dem Faserkopf werden insgesamt 16 einzelne Faserstränge über Faserstrangführungen geführt.

Aus der EP 0 491 353 A1 ist eine Mehrfach-Achsen-Faserauftragsmaschine bekannt, die einen Legekopf an einem Roboterarm aufweist. Dieser Legekopf enthält eine Anpressrolle, mittels der Faserstränge kompaktiert und angedrückt werden können. Der Legekopf verarbeitet ein Roving zu einem Band und legt das Band auf einer drehbar gelagerten Vorform auf. Die Rovings werden vorher mit Harz imprägniert. Die einzelnen Elemente sind temperaturgesteuert, um die Klebrigkeit des Harzes an den jeweiligen Verarbeitungsschritt anzupassen. Insbesondere kann die Kompaktierrolle erhitzt werden, um die Klebrigkeit beim Aufpressen zu erhöhen. Auch hier werden die Rovings über Faserführungen direkt von Vorratsspulen zu dem Legekopf geführt.

Aus der FR 2882681 ist ebenfalls eine Faserauftragsmaschine zum Herstellen von faserverstärkten Verbundstrukturen bekannt. Diese weist einen Legekopf zum Anbringen von Fasersträngen auf. Der Legekopf hat ebenfalls eine Auflegerolle zum Auflegen der Fasern auf eine Vorform. Weiter ist der Legekopf, der am Ende eines Roboterarms beweglich angebracht ist, mit einer Auftragsvorrichtung zum Auftragen von Harz auf jede Faser kurz vor dem Verlegen versehen. Damit lässt sich im Kopf beispielsweise ein Thermoplast als Bindematerial aufbringen. In dem Kopf ist auch eine Schneidvorrichtung zum Schneiden der Faserstränge in gewünschte Längen vorgesehen. Diese Schneidvorrichtung ist der Vorrichtung zum Aufbringen von Harz vorgelagert. Ein Transport der Faserstränge von der Schneidvorrichtung zu der Auflegerolle erfolgt mit Luft. Außerdem ist eine Kühlvorrichtung zum Kühlen der die Auflegerolle kontaktierenden Faserstränge vorgesehen, um die Klebrigkeit einzustellen. In der Harzauftragsvorrichtung können Heizeinrichtungen vorgesehen sein, um die Viskosität des Harzes zwecks Dosierung und Aufbringung einzustellen. Zu dem Legekopf werden eine Vielzahl von Fasersträngen, die nebeneinander zu einem Faserband vereinigt gelegt werden, geliefert. Hierzu gibt es eine Transporteinrichtung, durch die die Endlosfaserstränge von Vorratsspulen bis zu dem Legekopf geführt ist.

Aus der DE 103 01 646 A1 ist ein Faden- oder Fasergelege sowie ein Herstellverfahren hierfür bekannt. Dabei werden einzelne Strangstücke eines Faserstrangmaterials spannungsfrei abgelegt. Dies erfolgt mittels einer Vielzahl von kombinierten Lege- und Trennvorrichtungen, die neben der Legefunktion zum Verlegen des einzelnen Faserstranges auch eine Trennfunktion zum Abtrennen des Faserstrangstückes aufweisen. Die Lege- und Trennvorrichtung ist rohrförmig ausgestaltet und kann eine gewisse Aufspreizfunktion aufweisen, in dem ein ursprünglich mit rundem Querschnitt versehener Faserstrang in einen flacheren, mehr rechteckigen Querschnitt gebracht wird. Die Ablage erfolgt in der Regel mit parallelen benachbarten Strangstücken. Die Fixierung der einzelnen abgelegten Faserstrangstücke zum Untergrund kann mittels Klemmmitteln, welche ein weiteres Aufspreizen bewirken, oder mittels Verkleben erfolgen.

Aus der EP 0 511 937 A1 sind ein Verfahren und eine Vorrichtung zum Herstellen einer Preform für eine Faserverbundstruktur bekannt, bei dem von einem breiten Prepregband individuell entsprechend der zu fertigenden Form geformte Prepreg-Flächenstücke ausgeschnitten werden und mit einer automatisch gesteuerten Legevorrichtung passend in einer Form platziert werden. Die Legevorrichtung bewegt sich gesteuert durch eine Steuerungsvorrichtung zwischen einer Aufnahmeposition und einer Verlegeposition. Eine Schneidvorrichtung ist derart gesteuert, dass aus der Fläche eines breiten Prepreg-Bandes die individuell gestalteten Formen ausgeschnitten werden. Diese Formen sind in Länge, Breite und Kontur individuell an die herzustellende Preform angepasst.

Jedoch sind die bekannten Verfahren zum Herstellen von Preforms kompliziert in der Anwendung und der Prozesstechnik. Insbesondere bei solchen Bauteilen, wo gekrümmte Kraftflusslinien mit variierender Dichte zu erwarten sind, ist mit den bisher bekannten Methoden die Herstellung eines entsprechend kraftflussgerechten ausgelegten Bauteiles nicht möglich. Insbesondere können die Fasern nicht beliebig entlang definiert gekrümmter Bahnen orientiert werden, und der Fasergehalt lässt sich nicht lokal variieren.

Es ist demgemäss Aufgabe der Erfindung, ein Verfahren und eine Vorrichtung zum Herstellen von textilen Halbzeugen für kraftflussgerecht ausgelegte Faserverbundstrukturen zu schaffen, bei denen die Fasern einfacher und besser an komplizierte Kraftflussverläufe anpassbar sind. Insbesondere soll ein einfacheres Herstellverfahren für ein kraftflussgerecht ausgelegtes Bauteil ermöglicht werden, in welchem Fasern entlang beliebig definiert gekrümmter Bahnen orientierbar sind und der Fasergehalt lokal variierbar ist.

Diese Aufgabe wird durch ein Verfahren zur Herstellung von Preforms für kraftflussgerecht ausgelegte Faserverbundstrukturen mit den Schritten des beigefügten Patentanspruches 1 sowie eine Vorrichtung zur Durchführung eines solchen Herstellverfahrens mit den Merkmalen des Anspruches 11 gelöst. Eine vorteilhafte Verwendung des Herstellverfahrens ist Gegenstand des nebengeordneten Anspruches 10.

Vorteilhafte Ausgestaltungen der Erfindung sind Gegenstand der Unteransprüche.

Bei dem erfindungsgemäßen Verfahren lässt sich eine Preform dadurch herstellen, dass zunächst ein flaches Faserband zur Verfügung gestellt wird. Hierzu wird gemäß einer bevorzugten Ausgestaltung ein Faserfilamentbündel, vorzugsweise ein Roving, flach aufgespreizt.

Gemäß einer anderen Ausgestaltung des Verfahrens wird das flache Faserband dadurch erhalten, dass zunächst ein als vorimprägniertes Halbzeug vorliegendes Faserband zur Verfügung gestellt wird. Beispielsweise sind vorimprägnierte Faserhalbzeuge in Form von Prepregs oder von mit thermoplastischem Material getränkter Faserhalbzeugen erhältlich. Diese Halbzeuge können unidirektionale Fasern - insbesondere in Bandlängsrichtung oder auch ein Fasergewebe aufweisen.

Von dem flachen Faserband, das z.B. als aufgespreiztes Faserfilamentbündel oder als mit Bindermaterial vorimprägniertes als Halbzeug angeliedertes Faserband vorliegt, wird dann ein Faserbandstück, in der folgenden Beschreibung auch Patch genannt, vorzugsweise mit vordefinierter Länge, abgeschnitten. Anschließend wird das Faserbandstück mittels einer Legevorrichtung aufgenommen und an einer vordefinierten Position platziert. Dort wird das Faserbandstück mittels eines Bindermaterials fixiert. Das Abschneiden, Verlegen und Fixieren von Faserbandstücken wird wiederholt, wobei die Faserbandstücke an unterschiedlichen vordefinierten Positionen platziert und fixiert werden. Dies erfolgt vorzugsweise derart, dass aus den mehreren aneinander und/oder an eventuelle weitere Bestandteile der Preform fixierten Patchen die gewünschte Preform mit entsprechend kraftflussgerechter Faserorientierung gebildet wird. Es lässt sich dadurch zum Beispiel auch ein Bereich einer konventionell hergestellten Preform gezielt verstärken, beispielsweise indem an besonders belasteten Stellen Patches kraftflussgerecht abgelegt werden.

Die Erfindung, die auch Fiber-Patch-Preforming-Technologie genannt werden kann, ermöglicht durch einen speziellen Legeprozess das positionsgenaue Aufbringen kurzer Faserstücke (Patches). Über die Orientierung und Anzahl der Faserstücke können die geforderten Eigenschaften der Preform erfüllt werden.

Eine Orientierung auch entlang stärker gekrümmter Bahnen ist durch das Aufschneiden in kurze Faserstücke ermöglicht. Untersuchungen haben ergeben, dass trotz der Verwendung kurzer Faserstücke anstelle von Endlosfaserstrukturen dennoch - insbesondere aufgrund der exakten Orientierung und der besseren Anpassbarkeit - sehr hohe Festigkeitswerte erreichbar sind, wobei gegenüber den rein textilen Preforming-Verfahren eine wesentliche Vereinfachung des Legeprozesses ermöglicht ist.

Bei dem erfindungsgemäßen Verfahren können durch die Ablage flacher kurz geschnittener Faserstücke kraftflussoptimierte Preformen hergestellt werden. In bevorzugten Ausgestaltungen schneidet ein Faserschneidwerk speziell vorgefertigte, bebinderte Faserbänder oder Faserbänder am bereits mit Bindermaterial vorgetränktem Halbzeug in kurze Stücke und übergibt diese an ein Vakuumfließband. Dort werden die Faserbandstücke vereinzelt und zu der Legevorrichtung transportiert. Die Übergabe der Faserbandstücke an einen Legekopf der Legevorrichtung erfolgt vorzugsweise fliegend über eine Kombination aus Ansaugmodulen und Abblasmodulen. In bevorzugter Ausgestaltung ist eine Heizvorrichtung an dem Legekopf vorgesehen, die das Faserbandstück während des Transports zum Ablegeort gegenüber der Umgebungstemperatur aufheizt und dadurch den Binder aktiviert. Vorzugsweise wird der Legekopf während seiner Bewegung zwischen Aufnahmeposition und vordefinierter Position beheizt, insbesondere erwärmt, um das Bindermaterial zu aktivieren.

Vorzugsweise wird das Faserbandstück beim Platzieren an einer vordefinierten Position an einen Teilbereich einer Formfläche für die Preform gepresst, um dem Faserbandstück eine gewünschte dreidimensionale Flächengestaltung zu geben. Der Legekopf presst das Faserbandstück auf die vordefinierte Stelle und löst sich dann vorzugsweise mit einem Abblasimpuls. Der Legekopf kehrt danach in Ausgangsposition zurück.

Die Technologie gemäß der Erfindung und/oder von deren bevorzugten Ausgestaltungen erlaubt die vollautomatische Produktion von komplexen Faserpreformen. Parameter wie Fasergehalt, Faserorientierung und Kurvenradien können weitgehend variiert werden.

Bei der Ausführung, in der speziell angefertigte flache Faserbänder verwendet werden, wird bevorzugt das Bindermaterial zum Fixieren des Faserbandstückes auf die Faserfilamente aufgetragen, wobei das Bindermaterial vorzugsweise ein thermisch aktivierbares Bindermaterial, beispielsweise ein Thermoplast, ist. Prozesstechnisch einfach lässt sich dies realisieren, wenn das Bindermaterial in Form von Pulver vorliegt und auf die Faserfilamente aufgebracht wird, und dort durch eine kurze Erwärmung anhaftet. Wenngleich möglich ist, das Bindermaterial während des Transportes zwischen dem Abschneiden und dem Platzieren aufzubringen, so hat es sich als prozesstechnisch einfacher realisierbar erwiesen, wenn das Bindermaterial vorher auf die Faserfilamente aufgetragen wird. Eine gute Verteilung unter gleichzeitig einfacher Anbringung lässt sich erreichen, wenn das Bindermaterial zwischen dem Aufspreizen und dem Abschneiden auf das aufgespreizte Faserfilamentbündel aufgetragen wird.

Bei der Ausführung, in der vorimprägnierte Halbzeuge zum Liefern des flachen Faserbandes verwendet werden, werden als vorimprägnierte Halbzeuge vorzugsweise Prepregs oder Thermoplastbänder verwendet. Dadurch müssen die Ausgangsmaterialien zum Liefern der Fasern nicht erst mit Bindermaterial ausgerüstet werden, sie liegen gleich in der passenden Ausgangsform für das Verfahren vor.

Vorteilhaft ist das vorimprägnierte Halbzeug ein Prepreg, wobei in bevorzugter Ausgestaltung zumindest das Abschneiden des Faserbandstückes und das Aufnehmen des Faserbandstückes bei einer Temperatur unter 20°C, insbesondere bei einer Temperatur unter 0°C und mehr insbesondere bei einer Temperatur unter -10°C durchgeführt werden.

Weiter vorteilhaft ist das vorimprägnierte Halbzeug ein Thermoplastband.

Vorzugsweise besteht das vorimprägnierte Halbzeug aus einem vorimprägnierten Fasergewebe.

Besonders bevorzugt ist das Fasergewebe aus in wenigstens zwei unterschiedlichen Richtungen orientierten Fasern gebildet.

Vorteilhaft umfasst die Bereitstellung eines flachen Faserbandes das Zuschneiden des vorimprägnierten Fasergewebes in Bandform.

In bevorzugter Ausgestaltung wird ein Halbzeug verwendet, das mit durch Temperaturänderung aktivierbaren Bindermaterial vorimprägniert ist, und dass das abgeschnittene Faserbandstück im Verlaufe des Verfahrens erwärmt und/oder abgekühlt wird.

Patches aus dünnen Geweben sind ebenfalls verwendbar. Bei der Verwendung von Gewebe-Halbzeugen lassen sich gleichzeitig Fasern in unterschiedlichen Faserrichtungen ablegen. Beispielsweise sind die Gewebe aus Fasern in wenigstens zwei unterschiedlichen Faserorientierungen gebildet (zum Beispiel 0° und 90°).

Speziell mit dieser einfacheren Faser-Patch-Technologie können Prototypen ähnlich wie bei einem Rapid-Prototyping-Verfahren aufgebaut werden. Diese Bauteile können dann mit um einen bestimmten Faktor reduzierten Materialeigenschaften getestet werden, bevor aufwändigere Herstellmethoden eingesetzt werden.

Um auch komplizierte dreidimensionale Gestaltungen ausbilden zu können, ist weiter bevorzugt, dass beim Platzieren das Faserbandstück auf einen Teilbereich einer Formfläche für die Preform gepresst wird. Dies lässt sich vorzugsweise dadurch erreichen, dass ein Legestempel mit einer elastischen Pressfläche an dem Legekopf verwendet wird. Vorteilhaft wird dabei das Anpressen an die Formfläche mittels einer elastisch verformbaren Aufnahmefläche des Legekopfes durchgeführt, an der das Faserbandstück während des Legevorganges und Andrückvorganges flach anliegend festgehalten wird.

Je kürzer die Faserbandstücke oder Patches abgeschnitten werden, desto kleinere Krümmungsradien lassen sich durch unterschiedliche Orientierung von in Faserrichtung hintereinander abgelegten Faserbandstücken nachbilden. Daher ist bevorzugt, dass zum Bilden des Faserbandstückes ein Stück definierter Länge, vorzugsweise jeweils ein Stück von weniger als ca. 20 cm, insbesondere von weniger als ca. 10 cm abgeschnitten wird. Werden die Faserstücke sehr kurz, dann ergeben sich höhere Anforderungen an die Vorrichtungen zur Handhabung der Faserbandstücke, insbesondere an eine Schneidvorrichtung, die mit entsprechend kürzerem Abstand möglichst genau definiert abschneiden soll, sowie an die Legevorrichtung, die dann entsprechend mehr Faserbandstücke für eine gegebene Fläche der Preform verlegen muss. Daher wird als unterer Wert für die Länge der Faserbandstücke ca. 10 mm bevorzugt. Je nach Größe des herzustellenden Bauteiles können diese Größenangaben entsprechend variieren.

Ein Legekopf der Legevorrichtung wird erfindungsgemäß - vorzugsweise automatisch - so gesteuert, dass er zwischen wenigstens einer oder mehreren Aufnahmepositionen, wo die einzelnen Faserbandstücke aufgenommen werden und den jeweils für die einzelnen Faserbandstücke vorbestimmten Positionen, wo die Faserbandstücke platziert werden, hin- und herverfahrbar ist.

Um die Faserbandstücke oder Patches nach dem Abschneiden zu vereinzeln oder mit einem genügend großen Abstand zueinander zu versehen, so dass sie sicher einzeln von der Verlegevorrichtung nacheinander ergriffen werden können, ist ein Transport mittels einer Transporteinrichtung bevorzugt, die eine größere Transportgeschwindigkeit als die Fördergeschwindigkeit des gespreizten Faserfilamentbündels zu einer Schneidvorrichtung hat. Daher ist vorteilhaft die Transportgeschwindigkeit beim Transportieren des Faserbandstückes größer als eine Fördergeschwindigkeit des flachen Faserbandes, um nachfolgend abgeschnittene Faserbandstücke voneinander zu trennen.

Um die Faserbandstücke lagegenau zu positionieren, ist es weiter bevorzugt, dass die einzelnen Patches an der Transporteinrichtung und/oder der Legevorrichtung, insbesondere an einem Legekopf davon, festgehalten werden.

In bevorzugter Ausgestaltung wird das Faserbandstück zum Transportieren pneumatisch an einem Transportband festgehalten, wobei vorteilhaft das Faserbandstück mittels eines pneumatischen Impulses von dem Transportband zu dem Legekopf übergeben wird.

Dies ist bevorzugt mit pneumatischen Kräften, insbesondere mittels Ansaugen und Abblasen, durchführbar. Das Festhalten mittels pneumatischem Ansaugen hat den Vorteil, dass die einzelnen Faserbandstücke, insbesondere wenn sie aufgespreizt sind, wobei einzelne Filamente vorzugsweise bereits durch Bindermaterial vorfixiert sind, flach ohne Verwerfungen aufliegen können. Aufgrund der flachen, beispielsweise aufgespreizten Struktur des Faserbandstückes, ist das Festhalten problemlos möglich.

Als Filamentbündel, welches bei einer vorteilhaften Ausgestaltung der Erfindung zum Liefern des Ausgangsmaterials aufgespreizt wird, wird vorzugsweise ein Roving, insbesondere ein Kohlenstoff-Roving verwendet.

Vorzugsweise werden Faserbandstücke mit ihrer Faserrichtung entlang vordefinierter gekrümmter Bahnen orientiert platziert, wobei an unterschiedlichen Teilbereichen der Preform eine unterschiedliche Anzahl von Faserbandstücken platziert wird, um unterschiedliche Fasergehalte an den Teilbereichen der Preform zu erhalten.

Die Faserbandstücke oder Patches werden zum Beispiel so verlegt, dass sie sich an Randbereichen teilweise überlappen, so dass eine Fixierung der Faserbandstücke aneinander erfolgen kann. Andererseits ist das Überlappen benachbarter Faserbandstücke unter dem Aspekt unerwünscht, dass aufeinanderliegende Fasern benachbarter Faserbandstücke zu Aufdickungen führen können, die die Festigkeit beeinträchtigen können. Wenn man das Abschneiden der Patches bzw. Faserbandstücke entlang von bogenförmigen Schneidlinien, insbesondere entlang von kreisbogenförmigen Schneidlinien durchführt, dann lässt sich an einem Ende jedes Faserbandstückes ein konkaver Kantenbereich und an einem anderen Ende des Faserbandstückes ein komplementärer konvexer Kantenbereich erhalten. Die Faserbandstücke können dann mit ihren entsprechend bogenförmig gekrümmten Schneidkanten aneinanderliegend aneinandergereiht werden, wobei Überlappungen oder Lücken minimiert werden. Vorzugsweise werden Faserbandstücke mit zueinander komplementären kreisbogenförmigen Schneidkanten überlagerungsfrei hintereinander platziert. Insbesondere bei einer kreisbogenförmigen Schneidkante können dabei die Faserbandstücke eng aneinanderliegend mit verschiedenen Faserausrichtungen zueinander orientiert werden, ohne dass Aufdickungen oder Überlappungen entstehen.

Eine Fixierung der Faserbandstücke an ihrer vorbestimmten Position und in ihrer vorbestimmten Orientierung in der Preform kann beispielsweise anhand links und rechts benachbarter Faserbandstücke oder anhand einer versetzt aufgebrachten weiteren Lage von Faserbandstücken, wobei die aufeinanderliegenden Faserbandstück-Lagen mittels des Bindematerials fixiert werden, oder insbesondere im Falle, dass die Fiber-Patch-Technologie zur bereichsweisen Verstärkung von Preformen eingesetzt wird, an weiteren Bestandteilen der Preform, beispielsweise an einem konventionellen Fasergelege, erreicht werden.

Vorteilhaft wird das Anbringen des Bindermaterials vor dem Abschneiden des Faserbandstückes durchgeführt.

Mit dem erfindungsgemäßen Verfahren lässt sich somit eine Preform in einer Art Patchwork-Leganordnung unter Anpassung der Anzahl und der Orientierung der einzelnen Patches erzielen.

Eine erfindungsgemäße Vorrichtung, mit der das erfindungsgemäße Verfahren durchführbar ist, weist wenigstens eine Spreizvorrichtung zum Aufspreizen eines Rovings auf.

Die Spreizvorrichtung ist bevorzugt mit wenigstens einer konvex gebogenen Spreizkante versehen, die mit wenigstens einer Richtungskomponente senkrecht zur Längserstreckung eines aufzuspreizenden Faserfilamentbündels relativ zu diesem bewegbar ist, so dass das Faserfilamentbündel auf die konvex gebogene Spreizkante unter Spannung auflegbar ist, und anschließend wieder mit wenigstens einer Richtungskomponente senkrecht von dem dem Faserfilamentbündel weg bewegbar ist, um dieses von der Spreizkante zu lösen.

Vorteilhaft ist die wenigstens eine Spreizkante an einem an einer Drehwelle drehbaren radialen Vorsprung ausgebildet und hat in bevorzugter Ausgestaltung wenigstens zwei Kantenbereiche, von denen wenigstens einer als konvex gebogene Spreizkante ausgebildet ist und die von entgegengesetzten Richtungen auf das Faserfilamentbündel zu bewegbar sind. Dazu sind vorteilhaft zwei Drehwellen mit radialen Vorsprüngen vorgesehen sind, wobei sich die Drehwellen gegenläufig zueinander drehen. An den gegenläufig, insbesondere mittels eines Zahnradgetriebes, angetriebenen Drehwellen sind vorzugsweise mehrere, die radialen Vorsprünge bildende Flügel ausgestaltet, die sich im wesentlichen in axialer Richtung erstrecken und an deren radial äußersten Bereiche die Kantenbereiche ausgebildet sind. Weiter vorteilhaft sind mehrere zur Spreizung dienende Kantenbereiche als konvex radial nach außen gebogene Spreizkanten ausgestaltet, wobei nacheinander auf das Faserfilamentbündel aufzusetzende Kantenbereiche an sich gegenläufig bewegenden Bewegungsorganen so angeordnet sind, dass die Fasern jeweils zwischen zwei gegenläufig gebogenen Spreizkanten aufspreizbar sind. Die Spreizvorrichtung weist vorzugsweise eine in Förderrichtung des Faserfilamentbündels hinter einer die wenigstens eine Spreizkante aufweisenden Spreizeinreichtung vorgesehene Lockerungseinrichtung zum Auflockern der aufgespreizten Faserfilamentbündel auf, wobei an der Lockerungseinrichtung eine Saugkammer vorgesehen ist.

Weiter vorzugsweise weist die erfindungsgemäße Vorrichtung eine Transporteinrichtung auf. Vorteilhaft weist die Transporteinrichtung ein Vakuumfließband auf, auf dem die Faserbandstücke unter Anwendung eines Saugdruckes festgehalten transportierbar sind, wobei die Transporteinrichtung besonders bevorzugt eine Kombination von Ansaug- und Abblasmodulen aufweist, die zum Durchführen einer fließenden Übergabe der Faserbandstücke von der Transporteinrichtung zu der Legevorrichtung ausgebildet ist.

In bevorzugter Ausgestaltung ist eine Heizeinrichtung zum Aktivieren des Bindermaterials vorgesehen. In weiterer Ausgestaltung ist die Heizeinrichtung oder wenigstens eine von mehreren Heizeinrichtungen an dem Legekopf angeordnet, um aufgenommene Faserbandstücke aufzuheizen.

Ausführungsbeispiele der Erfindung werden nachfolgend anhand der dargestellten Zeichnungen näher erläutert. Darin zeigt:
**Fig. 1** eine schematische Übersichtsdarstellung über eine Vorrichtung zur Herstellung einer Preform zwecks Herstellung kraftflussgerechter Faserverbundstrukturen;
**Fig. 1a** eine schematische Darstellung einer alternativen Ausgestaltung der Vorrichtung von Fig. 1 an einer durch eine strickpunktierter Linie angedeuteten Trennebene;
**Fig. 2** eine schematische Darstellung einer bei der Vorrichtung gemäß Fig. 1 verwendbaren Abrollvorrichtung zum Abrollen eines in der Vorrichtung gemäß Fig. 1 verarbeitbaren Faserfilamentbündels;
**Fig. 3** eine schematische perspektivische Darstellung eines in der Abrollvorrichtung von Fig. 2 verwendbaren Positionssensors sowie ein Diagramm von dessen Kennlinie;
**Fig. 4** eine perspektivische Ansicht einer an sich bekannten Spreizvorrichtung zur Erläuterung des Wirkungsprinzips einer in der Vorrichtung gemäß Fig. 1 eingesetzten Spreizung eines Faserfilamentbündels;
**Fig. 5** eine perspektivische schematische Darstellung einer bei der Vorrichtung von Fig. 1 verwendbaren Spreizeinrichtung;
**Fig. 6a** eine schematische Seitenansicht einer bei der Vorrichtung von Fig. 1 verwendbaren Lockerungseinrichtung;
**Fig. 6b** eine schematische Darstellung des Wirkungsprinzips der Lockerungseinrichtung von Fig. 6a;
**Fig. 7** eine schematische Seitenansicht einer bei der Vorrichtung von Fig. 1 verwendbaren Bebinderungseinrichtung;
**Fig. 8** eine schematische Seitenansicht von bei einer Ausführungsform einer Vorrichtung zur Herstellung einer Preform eingesetzten Kombination aus Schneidvorrichtung und Legevorrichtung;
**Fig. 9/10** schematische Darstellungen des Wirkungsprinzips der Schneidvorrichtung von Fig. 8;
**Fig. 11** eine schematische Darstellung von vorgegebenen Bahnen zur Ablage von Fasern durch eine der Vorrichtungen gemäß Fig. 1 oder Fig. 8;
**Fig. 12** eine Reihe von durch die Vorrichtung gemäß Fig. 1 abgelegten Faserbandstücken
**Fig. 13** eine schematische Darstellung einer mit einer der Vorrichtungen gemäß Fig. 1 oder Fig. 8 herstellbaren Preform;
**Fig. 14** eine schematische Querschnittsansicht durch einen bei der Legevorrichtung von Fig. 8 oder Fig. 1 verwendbaren Legekopf;
**Fig. 15** eine Unteransicht auf den Legekopf von Fig. 14 und;
**Fig. 16** eine detailliertere schematische perspektivische Darstellung der Legevorrichtung aus Fig. 8.

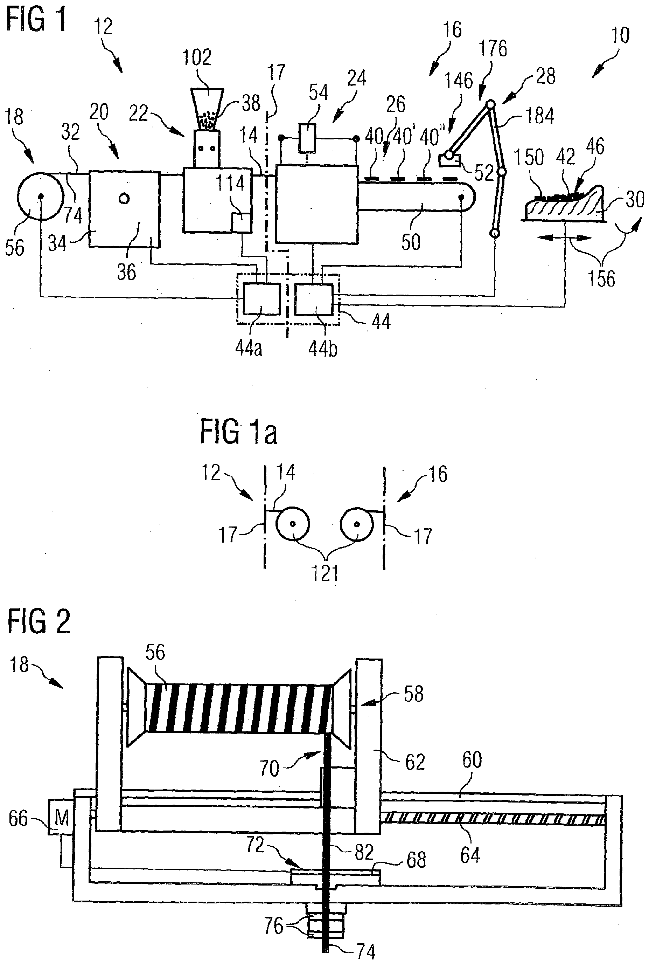

In Fig. 1 ist eine insgesamt mit 10 bezeichnete Preform-Herstellvorrichtung in der Übersicht dargestellt. Mit dieser Preform-Herstellvorrichtung lässt sich ein kompliziertes textiles Halbzeug mit kraftflussgerecht verlaufenden Faserfilamenten zur Herstellung von Faserverbundstrukturen selbst bei kompliziertem Aufbau des Halbzeugs in einfacher Weise herstellen. Derartige textile Halbzeuge werden Preforms genannt.

Die Vorrichtung ist zur Verarbeitung unterschiedlicher Ausgangsmaterialien geeignet. Die Herstellung dieser Preforms erfolgt in der Vorrichtung gemäß Fig. 1 aus mittels Bindermaterial fixierten einzelnen kurzen Faserstücken. Diese Faserstücke können zuvor von einem speziell vorbearbeiteten Faserfilamentstrang oder Faserband abgeschnitten worden sein.

Bei einer anderen Verfahrensweise werden diese kurze Faserstücke aus einem vorimprägnierten Halbzeug hergestellt. Das vorimprägnierte Halbzeug wird als bereits mit Bindermaterial imprägnierter Faserfilamentstrang oder Faserband zur Verfügung gestellt, von dem die kurzen Faserstücke abgeschnitten werden. Die Preform-Herstellvorrichtung lässt sich in eine Aufbereitungsgruppe 12 zur eventuellen Aufbereitung des Faserbandes 14 und in eine Schneid- und Legegruppe 16 zum Abschneiden von Faserbandstücken und Verlegen derselben aufteilen. Mit einer strichpunktierten Linie ist die mögliche Trennung 17 zwischen diesen Gruppen 12 und 16 angedeutet.

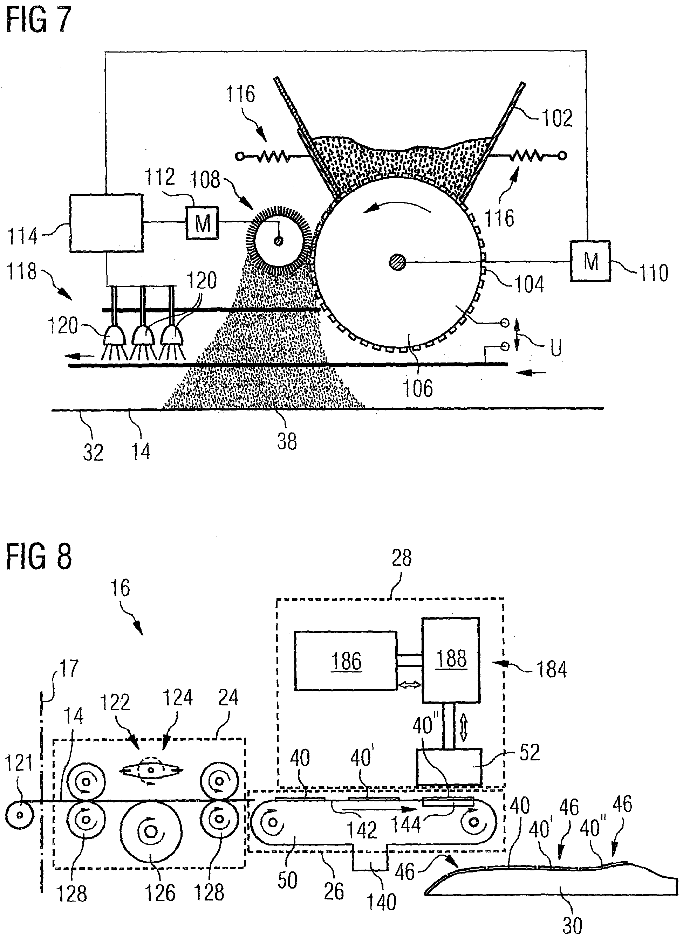

Fig. 1 zeigt ein erstes Ausführungsbeispiel einer solchen Schneid- und Legegruppe 16; ein zweites Ausführungsbeispiel einer solchen Schneid- und Legegruppe 16 ist in Fig. 8 dargestellt.

Zunächst wird anhand der Fig. 1 der Gesamtaufbau sowie das Wirkungsprinzip der Preform-Herstellvorrichtung 10 erläutert, wonach dann anhand der weiteren Figuren deren einzelne Baugruppen erläutert werden.

Wie aus Fig. 1 ersichtlich, weist die Preform-Herstellvorrichtung 10 eine Abrollvorrichtung 18, eine Spreizvorrichtung 20, eine Bebinderungsvorrichtung 22, eine Schneidvorrichtung 24, eine Transporteinrichtung 26, eine Legevorrichtung 28 sowie ein Vorform 30 auf. Diese Einzelvorrichtungen 18, 20, 22, 24, 26, 28 und 30 sind jeweils für sich verkehrsfähig und auch ohne die jeweils anderen Vorrichtungen zum Erfüllen ihrer Einsatzzwecke verwendbar. Die hiesige Offenbarung umfasst daher auch die jeweiligen Vorrichtungen 12, 16, 18, 20, 22, 24, 26, 28, 30 jeweils einzeln und alleine.

Die Abrollvorrichtung 18 dient zum Liefern eines Faserfilamentstranges, beispielsweise eines Rovings 32. Die Abrollvorrichtung 18 ist, wie dies im folgenden noch näher erläutert ist, derart ausgebildet, dass ein verdrehfreies Abrollen des Rovings 32 ermöglicht ist. Zum Herstellen von kohlefaserverstärkten (CFK) Bauteilen wird bei dem dargestellten Ausführungsbeispiel ein Kohlenstoff-Roving verwendet.

Die Spreizvorrichtung 20 dient zum möglichst breiten Aufspreizen der einzelnen Filamente des Rovings 32, um so ein möglichst flaches Faserband 14 aus möglichst wenigen Lagen nebeneinanderliegender einzelner Filamente zur Verfügung zu stellen. Hierzu weist die Spreizvorrichtung 20, wie dies nachfolgend noch näher erläutert wird, eine Spreizeinrichtung 34 und eine Lockerungseinrichtung 36 auf.

Die Bebinderungsvorrichtung 22 dient dazu, Filamente des Faserbandes 14 und/oder einzelne Faserbandstücke davon mit einem Bindermaterial 38 zu versehen, das zum Fixieren der Faserbandstücke in der Preform dient. In der in Fig. 1 dargestellten Ausführungsform ist die Bebinderungsvorrichtung 22 Teil der Aufbereitungsgruppe 12 und wird so zum Versehen des aufgespreizten Faserbandes 14 mit Bindermaterial 38 verwendet. In nicht dargestellten Ausführungsformen der Preform-Herstellvorrichtung 10 lässt sich zusätzlich oder alternativ eine Bebinderungsvorrichtung 22 der Schneid- und Legegruppe 16 zuordnen, um dann die bereits abgeschnittenen Faserstücke mit Bindermaterial 38 zu versehen.

Die Schneidvorrichtung 24 ist zum Abschneiden von Stücken definierter Länge von dem Faserband 14 (Faserstücke) ausgebildet. Die einzelnen Faserbandstücke werden im folgenden als Patches 40, 40', 40" bezeichnet.

Die Transporteinrichtung 26 dient zum Vereinzeln der Patches 40 und zum Transportieren derselben zu der Legevorrichtung 28.

Die Legevorrichtung 28 ist derart ausgebildet, dass sie einzelne Patches 40 erfassen kann und an vordefinierte Positionen, hier an der Vorform 30 platzieren können. Die Vorform 30 dient dazu, der Preform 42 eine vorgegebene dreidimensionale Flächengestaltung zu geben.

Die Preform-Herstellvorrichtung 10 weist weiter eine hier mehrere Steuerungen 44a, 44b aufweisende Steuerungsvorrichtung 44 auf, die die Einzelvorrichtungen 12, 18, 20, 22, 26, 30 derart steuert, dass nach Art einer Patchwork-Decke aus oder mit den einzelnen Patches 40 die Preform 42 gebildet wird.

Mit der Preform-Herstellvorrichtung 10 lässt sich somit folgendes Herstellverfahren zum Herstellen einer Preform 42 für eine kraftflussgerechte Faserverbundstruktur automatisch durchführen:

Bei einer bevorzugten Ausführungsform wird ein in Form des Rovings 32 vorliegendes Faserfilamentbündel gespreizt und mit dem in dem vorliegenden Ausführungsbeispiel thermisch aktivierbaren Bindermaterial 38 versehen.

Bei einer einfacheren Verfahrensweise werden bereits vorimprägnierte Halbzeuge in Faserbandform zur Verfügung gestellt, so dass die Aufbereitungsgruppe 16 nicht benutzt werden braucht. Dieses Faserband ist bereits mit thermisch aktivierbarem Bindermaterial versehen. Es handelt sich beispielsweise um ein Faserband oder Fasergewebeband aus Prepreg oder in Form eines Thermoplastbandes.

Das so zur Verfügung gestellte bebinderte oder vorimprägnierte Faserband 14 wird bei beiden Verfahrensweisen anschließend in die Stücke definierter Länge - Patches 40 - geschnitten. Die Patches 40 werden vereinzelt und zu der Legevorrichtung 28 transportiert. Die Legevorrichtung 28 platziert jedes Patch 40 an einer jeweils vordefinierten Position 46 an der Vorform 30 und presst das Patch 40 auf die Vorform 30 auf.

Mit der Preform-Herstellvorrichtung 10 lässt sich somit eine Fiber-Patch-Preforming-Technologie durchführen, die durch einen speziellen Legeprozess das positionsgenaue Aufbringen kurzer Faserstücke ermöglicht. Über die Orientierung und Anzahl der Faserstücke können die geforderten Eigenschaften der Preform 42 erfüllt werden. Dadurch können Fasern entlang definiert gekrümmter Bahnen orientiert werden; und der Fasergehalt kann lokal variieren.

Durch die Ablage gespreizter, kurz geschnittener Faserbandstücke - Patches 40 - können kraftflussoptimierte Preformen 42 hergestellt werden. Ein Faserschneidwerk 48 schneidet die speziell vorgefertigten, bebinderten Faserbänder 14 in kurze Stücke, und über übergibt diese an ein Vakuumfließband 50 der Transporteinrichtung 26.

Die Übergabe der Patches 40 von dem Vakuumfließband 50 an einen Legekopf 52 der Legevorrichtung 28 erfolgt fliegend über eine Kombination aus Ansaug- und Abblasmodulen. Der Legekopf 52 heizt den Patch 40 während des Transports zum Ablegeort auf und aktiviert dadurch das Bindematerial 38. Der Legekopf 52 presst den Patch 40 auf die vordefinierte Stelle und löst sich dann mit einem Abblasimpuls. Der Legekopf 52 kehrt danach in die Ausgangsposition zurück.

Diese Technologie erlaubt die vollautomatische Produktion von komplexen FaserPreformen. Parameter wie Fasergehalt, Faserorientierung und Kurvenradien können weitgehend variiert werden.

In den hier dargestellten Ausführungsformen werden zum Herstellen der Preformen 42 gespreizte Kohlenstofffasern anstatt textiler Halbzeuge oder es werden zum Herstellen der Preformen 42 textile vorimprägnierte Halbzeuge als Ausgangsmaterial verwendet, welches speziell zugeschnitten wird. Die Länge der Fasern ist sehr kurz (wenige Zentimeter) im Vergleich zu vorkonfektionierten Gelegen, die Langfasern verwenden. Durch eine spezielle Positionierung der Kurzfasern - in den Patches 40 - können ähnlich hohe mechanische Kennwerte wie bei Langfaserverbunden erreicht werden.

Die Kurzfasern können relativ exakt entlang komplexer Kraftflusspfade gelegt werden. Bei zuvor zum Herstellen von solchen Preformen eingesetzten textilen Zuschnitten können nur Vorzugsorientierungen eingestellt werden. Dadurch können mit der hier dargestellten Technologie extreme geometrische Formen dargestellt werden. Das Herstellverfahren ist vollautomatisiert und es können Dickenvariationen innerhalb einer Preform und/oder veränderte Faservolumengehalte erhalten werden.

In dem in Fig. 1 dargestellten Ausführungsbeispiel der Preform-Herstellvorrichtung 10 wird in der Schneid- und Legegruppe 16 als Faserschneidwerk 48 ein Laser 54 verwendet, der prozessorgesteuert exakt relativ zu dem Faserband 14 bewegbar ist. Weiter ist in Fig. 1 als Legemechanik 184 zur Bewegung des Legekopfes 52 ein Roboterarm angedeutet. Die Vorform 30 ist exakt und definiert relativ hierzu bewegbar und drehbar, um verschiedene komplexe 3D-Strukturen von Preformen 42 einfach erzeugen zu können.

Zusammenfassend ist ein Grundgedanke einer hier vorgestellten Ausführungsform der Fiber-Patch-Preforming-Technologie, Kohlenstofffaser-Rovings 32 möglichst breit aufzuspreizen, mit Binderpulver zu beschichten und mit einer neuen Schneidtechnik in definiert lange Stücke, sogenannte Patches 40, zu schneiden.

Ein Grundgedanke einer weiteren Ausführungsform der Fiber-Patch-Preforming-Technologie ist, vorimprägnierte Halbzeug-Faserbänder mit dieser Schneidtechnik in definiert lange Stücke - Patches 40 - zu schneiden.

Bei beiden Ausführungsformen werden diese Patches 40 dann von der speziellen Legevorrichtung 28 aufgenommen, an eine vordefinierte Position platziert und mittels dem Bindermaterial 38 fixiert. Damit sind verschiedenste Bauteilgeometrien und Faserarchitekturen erzeugbar.

Bei dem bevorzugten Herstellprozess werden gespreizte Fasern eingesetzt. Eine Faserspreizung bildet eine Grundlage dafür, lokale Ansammlungen von Faserenden innerhalb des späteren Verbundwerkstoff zu vermeiden, da diese Spannungskonzentrationen verursachen und schlimmstenfalls zum Bauteilversagen führen könnten. Durch eine Spreizung reduziert sich die Dicke des Rovings 32. Damit können mehr durchgängige Fasern in den Einflussbereich eines Faserende gelangen und Spannungsspitzen kompensieren. Des weiteren wird bei überlappendem Ablegen die Stufe am Schnittende eines Rovings 32 reduziert. Eine solche Stufe könnte bei einem ungespreizten Roving bis zu 250µm hoch sein und würde zur Auslenkung der darüber liegenden Kohlenstofffaser aus der Kraftflussrichtung führen. Zusätzlich könnte dort eine harzreiche Zone entstehen, die sich negativ auf die Festigkeit des Materials auswirkt.

Um eine Spreizung möglichst wirksam durchzuführen, sollten Verdrehungen des Roving 32 vermieden werden, da querlaufende Filamente einen gespreizten Roving wieder einschnüren könnten. Die Spannung innerhalb des Roving 32 sollte im gespreiztem Zustand konstant sein, da durch Spannungsunterschiede die Spreizbreite und Spreizqualität beeinflusst werden könnte.

Die Abrollvorrichtung 18, die im folgenden anhand der Fig. 2 näher erläutert wird, dient dazu, einen Roving 32 von einer Vorratsspule 56 ohne Verdrehung anliefern zu können und die Pendelbewegung des Rovings 32 beim Abzug von der Vorratsspule 56 auszugleichen. Die Abrollvorrichtung 18 weist hierzu eine bewegliche Lagerung 58 der Vorratsspule 56 derart auf, dass sich die Vorratsspule 56 entsprechend der Lage des gerade abzurollenden Bereiches des Roving 32 nachbewegt, so dass die Abrollposition möglichst konstant bleibt.

Hierzu weist die Lagerung 58 einen entlang einer Linearführung 60 gelagerten Schlitten 62 auf. Der Schlitten 62 ist mittels Schrittmotoren und in dem hier dargestellten Beispiel mittels einer Antriebsspindel in Richtung der Drehachse der Vorratsspule 56 bewegbar. Die Bewegung des Schlittens 62 wird von einem Motor 66 mit integrierter Steuerung angetrieben. Ein Sensor 68 beobachtet die aktuelle Position 70 des Rovings 32 und steuert damit die Drehbewegung des Motors 66.

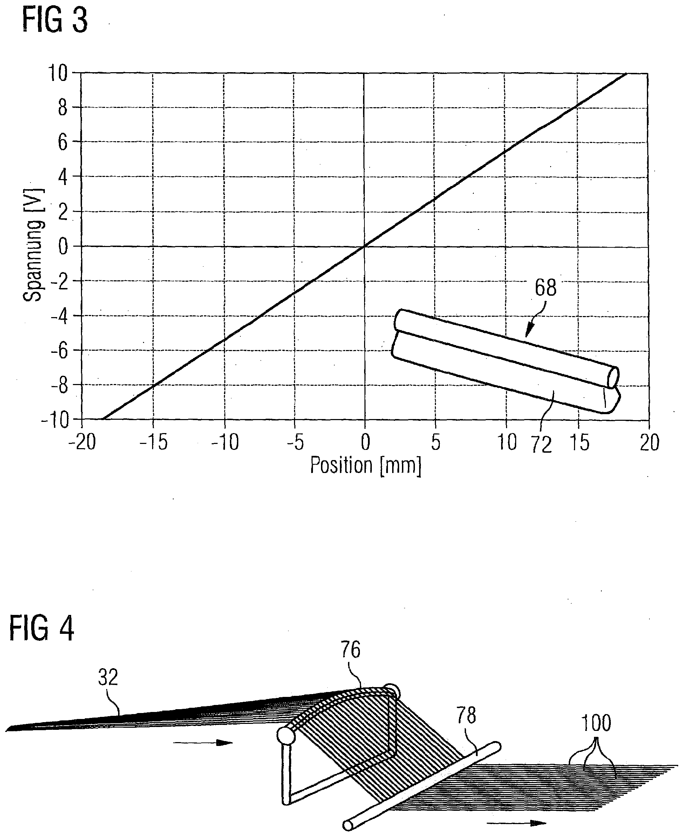

Als Sensor 68 dient hierzu eine ortsauflösende Fotodiode 72, die in Fig. 3 zusammen mit ihrer Kennlinie dargestellt ist. Eine Diodenzeile der Fotodiode 72 registriert den Schatten des Roving 32 und gibt die Position über eine Verstärkerschaltung (nicht explizit dargestellt) als Analogsignal aus. Der Mittelpunkt eines Schattens entspricht ortsabhängig einen bestimmten Spannungswert. Das Analogsignal wird als bipolares Spannungssignal an die Steuerung des Motors 66 übergeben, wobei 0 Volt der Sensormitte entspricht. Zusätzlich wird der Sensor 68 mit einem IR-LED-Scheinwerfer bei einer bestimmten Frequenz, beispielsweise 10 KHz, angeblitzt, um eine Beeinflussung des Messsignals durch Umgebungslicht zu verhindern. Dieser Sensor 68 ist auf die speziellen Anforderungen einer die Lage des Roving 32 auf der Vorratsspule 56 kompensierenden Abrollung optimiert und erlaubt noch weiterer Einstellungen, wie zum Beispiel Mittelpunktverschiebung und Biegeanpassung. Die Kombination aus ortsauflösender Fotodiode 72 und gesteuertem Servomotor 66 hat den Vorteil, dass die Gegenbewegung in Abhängigkeit der aktuellen Bewegungsgeschwindigkeit des Rovings 32 ausgelöst wird. Bei langsamen Abzugsgeschwindigkeiten werden relativ langsame Kompensationsbewegungen ausgelöst, während hohe Abzugsgeschwindigkeiten entsprechend schnelle Gegenbewegungen auslösen. Dadurch wird der Roving 32 weitgehend schwingungsfrei als flaches Bändchen 74 abgerollt. Am Ende der Abrollvorrichtung 18 umläuft der Roving 32 in einer S-förmigen Bewegung zwei Röllchen 75, hier zwei taillierte Edelstahlröllchen, die zusätzlich letzte Schwingungen beruhigen. Die Abrollvorrichtung 18 lässt sich anders als in Fig. 1 dargestellt auch vollkommen autonom von den übrigen Baugruppen betreiben und benötigt im Grunde nur eine Energieversorgung, beispielsweise einen Stromanschluss.

Der Roving 32 durchläuft im Anschluss an die Abrollvorrichtung 18 eine Spreizstrecke in der Spreizvorrichtung 20.

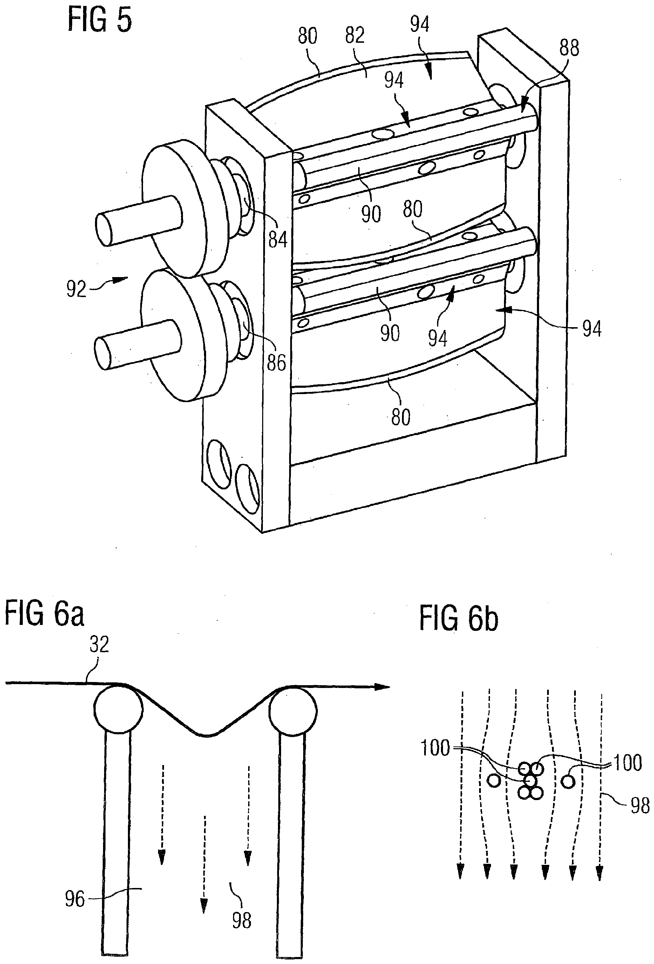

Die Spreizvorrichtung 20 weist, wie oben bereits erwähnt, zunächst die Spreizeinrichtung 34 auf, die genauer in Fig. 5 dargestellt ist und deren Wirkungsprinzip zunächst anhand der Fig. 4 erläutert wird.

Fig. 4 zeigt eine Prinzipskizze eines bereits aus der DE 715801 A bekannten alten mechanischen Spreizprinzips. Hier durchläuft ein Faserstrang 14 nacheinander eine gebogene Stange 76 und dann eine gerade Stange 78. Die Kombination aus einer geraden und einer gebogenen Stange sorgt bei in Fig. 4 dargestellten, grundsätzlich bekannten Radiusspreizern dafür, dass die auf die Faser wirkende Zugkraft umgeleitet wird. Es wirkt nun auch eine Kraft, die die Faser auf die gebogene Stange presst. An der höchsten Stelle der Auslenkung wirkt auf die Filamente die höchste Kraft. Mit zunehmender Entfernung von dieser Stelle wird die Kraft geringer. Das heißt, Filamente können der Belastung ausweichen, wenn sie auf der gebogenen Stange nach außen wandern. Dabei hängt es jedoch von der Zugkraft auf die Faser, der Reibung zwischen Faser und Stange, der Position der Stangen zueinander und von der Biegung der Stange ab, wie das Spreizergebnis aussieht. Bei einer extremen Biegung ist die Differenz der wirkenden Kräfte zwischen der höchsten Stelle und einer Außenposition so groß, dass die Oberflächenreibung der Stange keine Rolle mehr spielt. Die Filamente werden schlagartig nach außen wandern, d. h. der Roving 32 würde abrutschen oder sich spalten. Ist die Biegung zu gering, dann fällt das Spreizverhältnis zu niedrig aus.

Aufgrund dessen ist der in Fig. 4 dargestellte Radiusspreizer für die industrielle Bearbeitung von Rovings 32 zur Aufbereitung für die Preform-Herstellung in industriellem Maßstab nicht geeignet. Insbesondere würden Fehler im Roving 32, wie zum Beispiel Verdrehungen, Spalten oder Faltungen zum Abrutschen oder zum Spalten im gespreizten Material führen.

Die in Fig. 5 dargestellte Spreizeinrichtung 34 löst Probleme mit der Materialqualität von Rovings oder von sonstigen aufzuspreizenden Faserfilamentbündeln, indem der Roving 32 bzw. das Faserfilamentbündel immer wieder neu auf wenigstens eine konvex gebogene Spreizkante aufgesetzt wird. Hierzu weist die Spreizeinrichtung 34 wenigstens eine konvex gebogene Spreizkante 80 auf, die sich mit wenigstens einer Richtungskomponente senkrecht zur Längserstreckung des Rovings 32 oder des sonstigen Faserfilamentbündels relativ zu diesem so bewegt, dass dieses auf die konvex gebogene Spreizkante 80 unter Spannung aufgelegt wird und sich anschließend wieder mit wenigstens einer Richtungskomponente senkrecht von dem Roving 32 oder dem Faserfilamentbündel wegbewegt, so dass sich dieses von der Spreizkante 80 löst.

Die wenigstens eine Spreizkante 80 ist in praktischer Ausgestaltung an einem radialen Vorsprung 82 an einer Drehwelle 84 ausgebildet.

Bei der bevorzugten Ausgestaltung gemäß dem in Fig. 5 dargestellten Ausführungsbeispiel sind wenigstens zwei Kanten, von denen wenigstens eine als konvex gebogene Spreizkante 80 ausgebildet ist, von entgegengesetzten Richtungen auf den Roving 32 bzw. das Faserfilamentbündel zu bewegbar. Bei dem Ausführungsbeispiel sind hierzu zwei Drehwellen 84, 86 mit radialen Vorsprüngen 82 vorgesehen, wobei sich die Drehwellen 84, 86 gegenläufig zueinander drehen.

Neben ersten radialen Vorsprüngen 82, an denen konvex gebogene Spreizkanten 80 ausgebildet sind, sind in bevorzugter Ausgestaltung auch noch zweite radiale Vorsprünge 88 vorgesehen, welche mit geradlinigen Kanten 90 auslaufen. Dadurch ist eine Spreizvorrichtung geschaffen, bei der sich wenigstens eine konvex gebogene Spreizkante 80 und wenigstens eine geradlinige Kante 90 von entgegengesetzten Richtungen aus auf den Roving 32 oder das Filamentbündel zu bewegen können, bis der Roving 32 bzw. das Filamentbündel ähnlich der in Fig. 4 dargestellten Weise zwischen den Kanten 80, 90 gespreizt wird. Die Kanten 80, 90 sind auch zur Entlastung des Rovings 32 bzw. des Faserfilamentbündels wieder in entgegengesetzter Richtung zurückführbar.

Besonders einfach ist dies bei der Ausgestaltung gemäß Fig. 5 dadurch realisiert, dass an den gegenläufig, hier mittels eines Zahnradgetriebes 92, angetriebenen Drehwellen 84, 86 mehrere, die radialen Vorsprünge 82, 88 bildende Flügel 94 ausgestaltet sind, die sich im wesentlichen in axialer Richtung erstrecken und an deren radial äußersten Bereiche die Kanten 80 oder 90 ausgebildet sind. Dabei folgt auf einen Flügel 94 mit der geradlinigen Kante 90 in Umfangsrichtung ein Flügel mit der konvex radial nach außen gebogenen Spreizkante 80 und daraufhin wieder ein Flügel 94 mit geradliniger Kante 90 u.s.w.

In einer anderen Ausgestaltung sind die Kanten sämtlicher Flügel 94 als konvex radial nach außen gebogene Spreizkanten 80 ausgestaltet. Durch die Anordnung an sich gegenläufig bewegenden Bewegungsorganen, bei dem Ausführungsbeispiel die beiden Drehwellen 84, 86, werden die Fasern jeweils zwischen zwei gegenläufig gebogenen Spreizkanten 80 aufgespreizt.

Auf diese Art und Weise ist die Spreizeinrichtung 34 sozusagen als Flügelspreizer ausgebildet, der für eine immer wieder erneute Auflage des Rovings 32 auf Spreizkanten 80 sorgt. Zusätzlich wird eine Schlichte auf dem Roving 32 oder dem Faserfilamentbündel durch die wechselseitige Biegung aufgebrochen, und die Filamente 100 können sich unabhängig voneinander bewegen.

In der Spreizvorrichtung 20 folgt auf die als Flügelspreizer ausgebildete Spreizeinrichtung 34 in Förderrichtung des Rovings 32 weiter die Lockerungseinrichtung 36, die in der hier vorgestellten Ausgestaltung als Saugkammer nach dem sogenannten Fukui-Prinzip ausgestaltet ist. Die Saugkammer 96 kann von der Art sein, wie sie in der US-A-6 032 342 beschrieben ist. Der aufgelockerte und vorgespreizte Roving 32 wird dabei von einem starken laminaren Luftstrom 98 in die Saugkammer 96 gezogen. Die einzelnen Filamente 100 werden von Luft umströmt und können relativ leicht übereinander gleiten. Des weiteren kann die Saugkammer 96 leichte Schwankungen in der Spannung des Rovings 32 ausgleichen.

Bei der Herstellung von Kunststofffasern werden die Filamentbündel oftmals frei geführt und durch Ösen geleitet. Dabei können sich Teile der Filamente 100 um den Rest des Bündels drehen und zu Rovingeinschnürungen schon bei der Herstellung führen. Nach dem Aufwickeln auf eine Roving-Spule sind diese Fehler zunächst kaum sichtbar, da das Filamentbündel flach aufgezogen wird. Nach der Auflockerung der Filamentbündel in der Spreizeinrichtung 34 sind querlaufende Rovingteile jedoch deutlich sichtbar. Dieser Effekt kann zu Lücken und Verschiebungen im Roving 32 führen, die die Spreizqualität negativ beeinflussen.

Um ein möglichst homogenes Spreizbild zu erreichen, wird bei einer nicht explizit dargestellten Ausführungsform der Erfindung eine mehrstufige Spreizung vorgesehen, bei der das Spreizverhältnis stufenweise gesteigert wird. Hierzu ist zunächst eine erste Spreizeinrichtung 34 und eine erste Lockerungseinrichtung 36 zum Spreizen des Rovings 32 auf ein erstes Breitenmaß, beispielsweise auf einen Wert zwischen 8 und 16 mm, vorgesehen. Danach folgt eine weitere Stufe mit einer weiteren Spreizeinrichtung 34 und einer weiteren Lockerungseinrichtung 36 mit größeren Abmaßen als die ersten Spreizeinrichtung und die erste Lockerungseinrichtung, um so eine Spreizung auf eine größere Breite, beispielsweise einen Wert zwischen 20 und 35 mm durchzuführen.

Danach liegt der Roving 32 als breites dünnes Band, das Faserband 14, vor.

Im weiteren Verlauf wird dieses Faserband 14 noch mit einer geringen Menge des Bindermaterials 38 ausgerüstet.

Theoretisch liegen bei einem perfekt gespreizten, 30 mm breiten 12k-Roving nur noch drei Filamente übereinander. Dabei wurde ein Durchmesser der Filamente 100 von 7µm und eine höchste Packungsdichte angenommen. In der Realität weist ein Roving 32 jedoch immer Spreizfehler auf, die stellenweise zu dickeren Bereichen und damit zu einer höheren Anzahl von Filamentenden führen können.

Das Versehen des so aufgespreizten Rovings 32 mit Bindermaterial 38 wird in der in Fig. 7 vom Prinzip her dargestellten Bebinderungsvorrichtung 22 durchgeführt. Die Bebinderungsvorrichtung 22 ist vom Grundprinzip her nach Form eines Pulverstreuers ausgebildet, wie er beispielsweise in der US-A-3 518 810, der US-A-2 489 846, der US-A-2 394 657, der US-A-2 057 538 oder der US-A-2 613 633 beschrieben ist. Er hat demnach einen Trichter 102, an dessen Ausgang eine mit radialen Erhebungen 104 versehene Walze 106 vorbeiläuft.

Die Walze 106 ist in dem dargestellten Ausführungsbeispiel eine gerändelte Stahlwalze, die mit ihrer rauen Oberfläche den Pulvertransport übernimmt. Diese Walze 106 wird ihrerseits von einer Ausbürstwalze 108 bearbeitet, die das pulverförmige Bindermaterial 38 von der Walze 106 entfernt und auf das darunter vorbeilaufenden Faserband 14 streut.

Zwischen dem Faserband 14 und dem Auftragmechanismus kann eine Spannung U angelegt sein, so dass sich das Pulver, wie bei einer Pulverlackbeschichtung, elektrostatisch an das Faserband 14 anlegt.

Die Transport-Walze 106 sowie die Ausbürstwalze 108 sind durch zwei getrennte Elektromotoren 110 und 112 angetrieben, um die Streuparameter möglichst frei einstellen zu können. Die Steuerung erfolgt über eine Steuereinrichtung 114, die Teil der Steuerungsvorrichtung 44 sein kann.

Um zu vermeiden, dass das Pulver an Engstellen blockieren und Maschinenteile verklemmen kann, ist der Trichter 102 nicht am Rest der Bebinderungsvorrichtung 22 fest fixiert, sondern an einem Halter 116 gehalten, der Ausgleichsbewegungen zulässt. Ein Vorteil des Halters 116 ist dabei, dass der Trichter 102 im laufenden Betrieb schwingen kann und das Pulver automatisch nach unten gerüttelt wird. Das Pulver wird in genau dosierbarer Menge auf die Oberfläche des darunter mit einer definierten Geschwindigkeit, beispielsweise im Bereich von 3 bis 6 m/min, durchlaufenden Rovings 32 aufgestreut. Überschüssiges Pulver fällt am Roving 32 vorbei in einen Auffangbehälter (nicht dargestellt) und kann später wieder in den Prozess eingeführt werden.

Messungen haben gezeigt, dass die aufgestreute Menge an Bindermaterial nahezu linear zu der Drehgeschwindigkeit der Walze 106 abhängt.

Die Bebinderungsvorrichtung 22 weist weiter noch eine Heizeinrichtung 118 auf, um die Pulverpartikel des bei Heiztemperaturen schmelzenden Bindermaterials 38 an die Oberfläche der Filamente 100 zu fixieren.

Bei der dargestellten Ausführungsform weist die Heizeinrichtung 118 eine ca. 100 bis 500 mm lange Heizstrecke auf. Die bevorzugte Ausgestaltung der Heizeinrichtung 118 ist mit Heizstrahlern, hier mit Infrarot-Heizstrahlern 120 ausgestattet. Die Heizleistung der Heizeinrichtung 118 kann durch die Steuereinrichtung 114 genau eingestellt werden.

Die Binderpartikel werden leicht angeschmolzen und binden sich an die Faseroberfläche.

Danach kann - wie dies in Fig. 1 a angedeutet ist - das fertige Faserband 14 auf eine spezielle Filmspule 121 aufgerollt werden und für eine spätere Verwendung zwischengelagert werden.

Bei der weiteren mit dieser Vorrichtung ebenfalls durchführbaren Verfahensweise wird ein Faserband 14 verwendet, das als bereits vorimprägniertes Halbzeug vorliegt und beispielsweise auf einer Spule 121 angeliefert wird. Die Aufbereitungsgruppe 12 wird bei dieser Verfahrensweise nicht verwendet. Beispielsweise werden bereits in Faserbandform vorliegende oder durch eine hier nicht näher dargestellte Vereinzelungseinrichtung entsprechend in Bandform gebrachte Prepregs oder Thermoplastbänder verwendet. Dadurch müssen die Fasern nicht erst mit einem Binder ausgerüstet werden, und man spart sich gegenüber der zuvor erläuterten - an sich für das Endergebnis vorteilhafteren aber auch wesentlich aufwändigern - Verfahrensweise mit der eigenen Aufbereitung einiges an Zeit und Arbeit. Es können auch dünne Gewebematerialien, die ebenfalls in Form von Halbzeugen vorliegen und entsprechend vorimprägniert sind, verwendet werden. Eine solche kostengünstigere Verfahrensweise ist beispielsweise als eine Vorstufe in der Produktentwicklung zum Herstellen von Testprodukten einsetzbar, bevor dann bei erfolgreichen Tests aufwändigere Fertigungsverfahren zum Herstellen von Produkten mit verbesserten Materialeigenschaften eingesetzt werden.

Bei dem in Fig. 1 dargestellten Ausführungsbeispiel wird das als Halbzeug zur Verfügung gestellte oder speziell vorgefertigte Faserband 14 der Schneidvorrichtung zugeführt, wo es in die Patches 40, 40', 40" aufgeteilt wird und anschließend mittels der Legevorrichtung 28 verlegt wird.

Fig. 1 a zeigt eine Ausführung mit getrennten Gruppen 12, 16 unter Verwendung der Filmspulen 121 als Beispiel für eine Zwischenlagerung. Die Gruppen 12, 16 könnten so auch an getrennten Produktionsstandorten stehen.

In Fig. 8 ist eine zweite Ausführungsform der Schneid- und Legegruppe 16 näher dargestellt. Bei dieser Ausgestaltung gemäß Fig. 8 weist die Schneidvorrichtung 24 ein Faserschneidwerk 122 mit einer Messereinrichtung 124 und einer Gegenwalze 126 sowie mit wenigstens einer oder, wie hier dargestellt, mehreren Förderwalzen 128 auf.

Die Messereinrichtung 124 lässt sich abhängig von der Drehgeschwindigkeit der Gegenwalze 126 und/oder der Förderwalzen 128 zum Abschneiden von Patchen 40 mit definierter Länge betätigen.

Insbesondere weist die Messereinrichtung 124 einen (nicht näher dargestellten) Kupplungsmechanismus auf, der einen Antrieb der Messereinrichtung 124 mit einem Antrieb für die Walzen 126, 128 kuppelt.

Die Messereinrichtung 124 ist in dem dargestellten Beispiel mit einer Messerwalze 130 versehen, die als radialer Vorsprung wenigstens eine, hier mehrere Messerkanten 132 aufweist. Die Messerwalze 130 ist bei dem dargestellten Ausführungsbeispiel weiter durch die nicht näher dargestellte Kupplungseinrichtung so an den Antrieb der Gegenwalze 126 koppelbar, dass sich die Messerkanten 132 mit der gleichen Umfangsgeschwindigkeit wie die Oberfläche der Gegenwalze 126 bewegen.

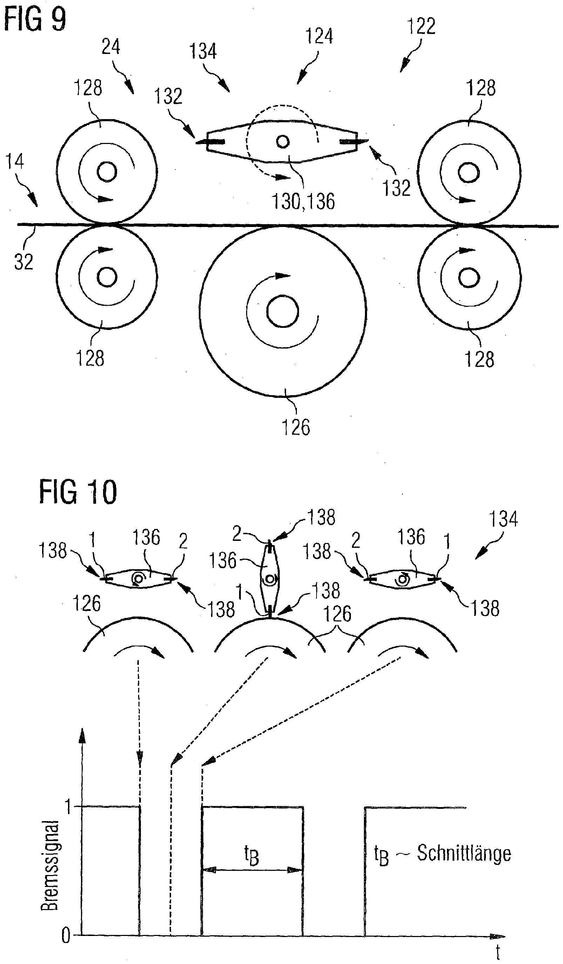

Die in Fig. 8 und in größeren Einzelheiten in Fig. 9 dargestellte Schneidvorrichtung weist demnach ein Kupplungsschneidwerk 134 auf, bei dem zwei Paare von Förderwalzen 128 und eine gummierte Gegenwalze 126 mittels eines nicht näher dargestellten Motors über ein zentrales formschlüssiges Getriebe, beispielsweise über einen Zahnriemen (nicht dargestellt) angetrieben wird. Die Förderwalzen 128 ziehen ein Endlosfaserband - hier insbesondere das aufgespreizte Faserband 14 - ein und leiten es über die in gleicher Geschwindigkeit drehende Gegenwalze 126.

Über der Gegenwalze 126 steht ein Messerbalken 136 in Warteposition. Soll ein Schnitt ausgeführt werden, kuppelt eine elektromagnetische Kupplung den Messerbalken 136 in die Schneidwerksbewegung ein. Im Berührpunkt haben der Messerbalken 136 und die Gegenwalze 126 die gleiche Drehgeschwindigkeit. Das zu schneidende Material wird durch eine Messerklinge 138 gebrochen. Danach wird der Messerbalken 136 ausgekuppelt und mit einer Bremseinrichtung, beispielsweise mit einer elektromagnetischen Bremse - nicht dargestellt -, angehalten. Das zweite Paar Förderwalzen 128 transportiert die Zuschnitte ab.

Das Kupplungsschneidwerk 134 ermöglicht den verzugsfreien Zuschnitt gespreizter Faserbänder. Der Schnitttakt, bzw. die Schnittlänge kann dabei computergesteuert im laufenden Betrieb verändert werden.

Die Bremsvorrichtung (nicht explizit dargestellt) sorgt dafür, dass die Messerwalze 130 immer arretiert ist, wenn die Kupplung nicht eingeschaltet ist. Der Kupplungs- und Bremsvorgang läuft über ein gemeinsames Wechslerrelais (nicht dargestellt), daher sind die Störungen durch Programmfehler ausgeschlossen. Eine nicht weiter dargestellter Sensoreinrichtung, beispielsweise ein induktiver Näherungsschalter, registriert die Position der Messer und sorgt für eine Bremsung der Messer in waagerechter Position. Wird von der angeschlossenen Steuerung, beispielsweise der Steuerungsvorrichtung 44, ein Schnittbefehl ausgelöst, kuppelt die Messerwalze 130 ein, beschleunigt und führt einen Schnitt aus. Wenn, wie bei dem Ausführungsbeispiel vorgesehen, die Messerwalze 130 in diesem Moment die gleiche Umfangsgeschwindigkeit hat wie die Gegenwalze 126, wird die Messerklinge 138 nicht verbogen, und es ergibt sich eine wesentlich längere Messerstandzeit, vergleichbar einem einfachen Stoßmesser. Nach dem Schnittvorgang wird die Messerwalze 130 ausgekuppelt und an der gleichen Position wie zu Beginn abgebremst und gehalten. Die Schnittlänge wird in einer Steuerungssoftware programmiert.

Fig. 10 zeigt den schematischen Ablauf der Schneidwerksteuerung. Wie aus Fig. 10 ersichtlich, wird abhängig von der Vorschubgeschwindigkeit des Schneidwerks der Schnitttakt vorgegeben. Die minimale Schnittlänge ergibt sich aufgrund der Dimensionen von Messerwalze 130 und Gegenwalze 126 und liegt beispielsweise in der Größenordnung der Breite des aufgespreizten Faserbandes 14. Die maximale Schnittlänge ist theoretisch unbegrenzt.

Bei beiden hier vorgestellten Ausführungsformen der Schneid- und Legegruppe 16 werden die Patches 40, 40', 40" nach der Schneidvorrichtung 24 an die Transporteinrichtung 26 weitergegeben, die die Patches 40, 40', 40" mit einer größeren Transportgeschwindigkeit als die Fördergeschwindigkeit des Faserbandes 14 zu der oder in der Schneidvorrichtung 24 von der Schneidvorrichtung 24 weg transportiert. Hierdurch werden die Patches 40, 40', 40" vereinzelt und mit genügend großem Abstand zueinander versehen. Die Transporteinrichtung 26 ist mit einer Halteeinrichtung, die die Patches 40, 40', 40" an der Transporteinrichtung festhält, und mit einer Übergabeeinrichtung versehen, die die Patches 40, 40', 40" an den Legekopf 52 der Legevorrichtung 28 übergibt.

Die Festhalteeinrichtung und die Übergabeeinrichtung sind hier in Form des Vakuumfließbandes 50 realisiert. Eine großvolumige Saugkammer 140 verteilt die Saugleistung einer nicht näher dargestellten Unterdruckquelle, beispielsweise eines Sauggebläses, über die gesamte Transporteinrichtung 26. Ein mit vielen durchgängigen Poren versehenes Band, beispielsweise ein Polypropylenband, wird über ein die Saugkammer 140 bedeckendes Lochblech 142 geführt.

Die Transporteinrichtung 26 wird durch eine Ankopplung an eine Fördereinheit der Schneidvorrichtung 24 angetrieben. In dem hier dargestellten Beispiel ist das Vakuumfließband 50 an das formschlüssige Getriebe, welches die Förderwalzen 128 und die Gegenwalze 126 antreibt, gekoppelt. Dabei sorgt ein entsprechendes Übersetzungsverhältnis, beispielsweise ein Übersetzungsverhältnis von 1 zu 2, für einen genügend großen Abstand zwischen den Patches 40, 40', 40". Am Ende der Transportstrecke liegt eine Saug-Abblaskammer 144, die mit einem pneumatischen Vakuummodul betrieben wird. Solange ein Faserstück - Patch 40 - über die Saug-Abblaskammer 144 geführt wird, befindet sich diese im Saugbetrieb. Wenn der Legestempel an einer vorgegebenen Übergabeposition 146 steht, wird im richtigen Moment ein Abblasimpuls ausgelöst, der den Patch 40 auf den Legekopf 52 befördert.

Der Legekopf 52 saugt den Patch 40 an, heizt ihn auf und transportiert ihn mit vorbestimmter Orientierung an seine vorbestimmte Position.

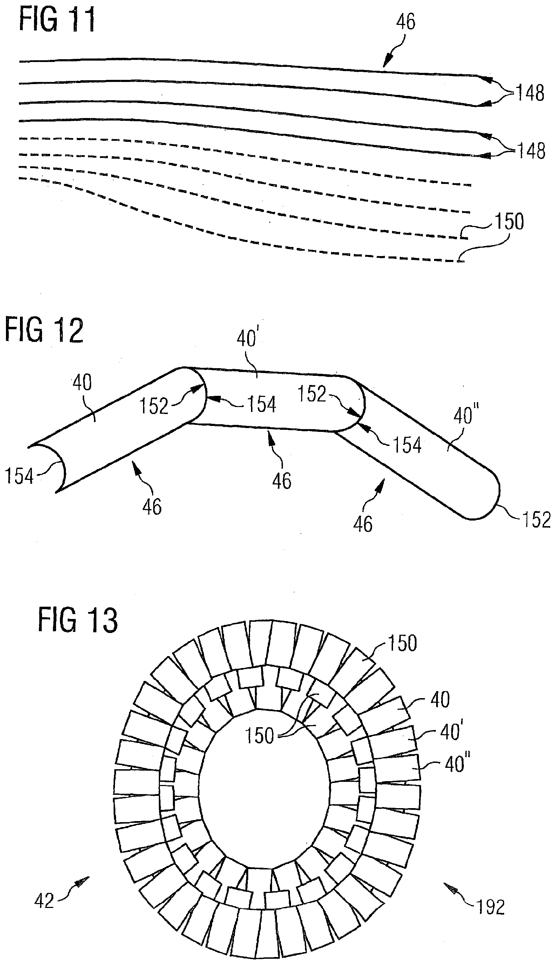

Dabei werden, wie dies in Fig. 11 dargestellt ist, die Patches 40, 40', 40" entlang vorbestimmter gekrümmter Bahnen 148 auf der Vorform 30 abgelegt. Bei 150 sind entlang dieser gekrümmter Bahnen 148 mit entsprechender Orientierung verlegte Patches und deren Überlappung angedeutet. In den Überlappungsbereichen werden die Patches 40 durch das durch den Legekopf 52 erwärmte Bindermaterial 38 aneinander fixiert.

Mit der in Fig. 1 dargestellten Schneidvorrichtung unter Verwendung des Lasers 54 (oder eines sonstigen Strahlschneidverfahrens) lassen sich aber auch kompliziertere Schneidkantenformen erzeugen. In Fig. 12 ist eine besonders vorteilhafte Schneidkantenform mit komplementär zueinander konvex bzw. konkav gekrümmten Schneidkanten 152, 154 dargestellt. Die entgegengesetzt gerichteten Schneidkanten 152, 154 an jedem Patch 40 sind kreisbogenförmig gekrümmt. Dadurch lassen sich die Schneidkanten 152, 154 hintereinanderliegender Patches 40, 40', 40" auch bei Abwinkelung der Patche 40, 40', 40" zueinander ganz eng nebeneinanderlegen, ohne dass Lücken oder Aufdickungen entstehen. Auf diese Weise können mit einer gleichbleibenden dichten Anlage von Faserstücken auch engere Krümmungsradien der Bahnen 148 mit entsprechenden Faserorientierungen belegt werden. Die Fixierung der Patches 40, 40', 40" kann durch Überlappung mit benachbarten oder darüber liegenden oder darunter liegenden Patches (nicht dargestellt) erfolgen.

Auf diese Art und Weise lassen sich auch sehr komplizierte Preforms 42 darstellen, wie sie beispielsweise in Fig. 13 angedeutet sind. Hier ist nach Art eines Patchworks mit den kurzen Faserstücken eine Preform 192 für eine kraftflussgerechte Faserverbundstruktur für einen Fenstertrichter, beispielsweise für einen Rumpf eines Luft- oder Raumfahrtgerätes, ausgebildet. Die Patches 40, 40', 40" sind entsprechend der Kraftflusslinien orientiert.

Die dargestellte Ringform lässt sich prozesstechnisch beispielsweise durch eine definiert drehbare Vorform 30 erreichen, wie dies durch die Pfeile 156 in Fig. 1 dargestellt ist.

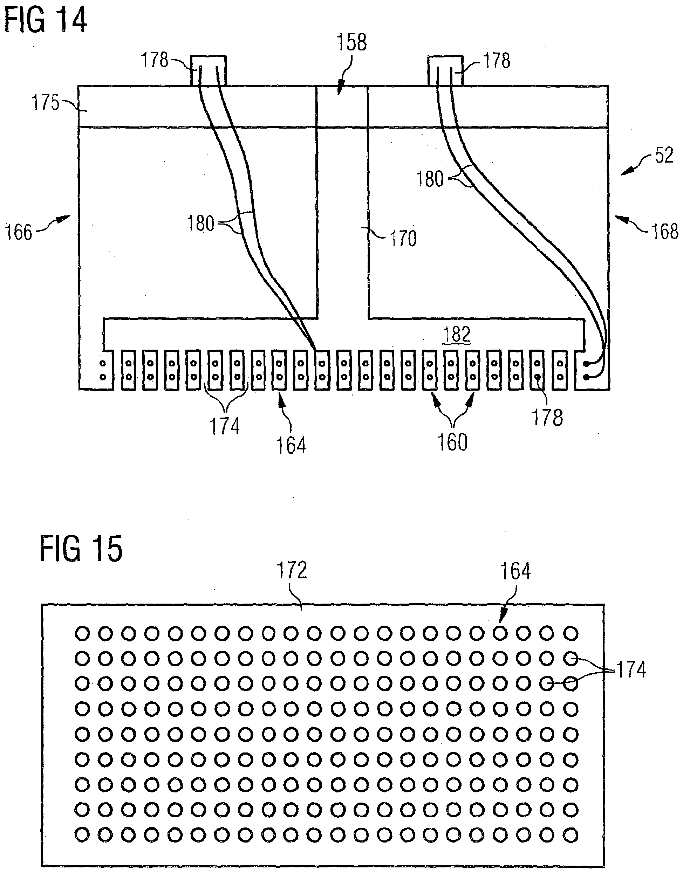

Anhand der Fig. 14 - 16 wird nun noch die Legevorrichtung 28 und deren Legekopf 52 der in Fig. 8 näher dargestellten Ausführungsform der Schneid- und Legegruppe 16 weiter erläutert.

Der Legekopf 52 soll die Funktion erfüllen, ein Faserstück oder Patch 40, 40', 40" aufzunehmen und zu der jeweils nächsten vorbestimmten Position 46 an der Vorform 30, wo ein Patch 40, 40', 40" verlegt werden soll, zu transportieren. Für diesen Zweck hat der Legekopf 52 eine Festhaltevorrichtung. Wenngleich auch andere Festhaltevorrichtungen denkbar sind, so ist in dem hier dargestellten Beispiel zwecks einfacher Aufnahme des Patches von der Transporteinrichtung 26 die Festhalteeinrichtung als Saugeinrichtung 158 ausgebildet.

Weiter ist es vorteilhaft, wenn das Bindermaterial 38, mit dem der aufgenommene Patch 40 versehen ist, während des Transports mit dem Legekopf 52 aktiviert wird. Hierfür weist der Legekopf 52 eine Aktivierungsvorrichtung zum Aktivieren des Bindermaterials 38 auf. Die Aktivierungsvorrichtung ist je nach verwendetem Bindermaterial ausgebildet. Wird z. B. ein durch ein Additiv aktivierbares Bindermaterial verwendet, dann weist der Legekopf eine Einrichtung zur Zugabe dieses Additivs auf. In einer anderen, hier nicht näher dargestellten Ausgestaltung wird gleich aktives Bindermaterial, wie beispielsweise ein Klebstoff, erst während des Transport des Patches am Legekopf zugeführt. Bei einer solchen Ausgestaltung weist der Legekopf eine Einrichtung zur Zugabe des Bindermaterials auf. Zur Verwendung in der zuvor erläuterten Preform-Herstellvorrichtung 10, die thermisch aktivierbares Bindermaterial 38 verwendet, ist die Aktivierungseinrichtung bei der dargestellten Ausführungsform als Heizeinrichtung 160 ausgebildet.

Weiter ist es vorteilhaft, wenn der Legekopf 152 das Patch 40, 40', 40" sicher auch an kompliziertere dreidimensionale Flächengestaltungen der Vorform 30 anbringen kann. Hierzu ist der Legekopf 52 mit einer Presseinrichtung 162 versehen, die zum Anpressen des transportierten Patches 40 an unterschiedliche Flächengestaltungen geeignet ist. Die Presseinrichtung 162 weist in bevorzugter Ausgestaltung eine flexible Oberfläche 164, an der das Patch 40 mittels der Festhalteeinrichtung festgehalten werden kann, auf. Die flexible Oberfläche 164 ist weiter bevorzugt an einem elastischen Trägerelement 166 ausgebildet.

Fig. 14 zeigt einen Querschnitt durch einen Legestempel 168 des Legekopfs 52, welcher die Festhalteeinrichtung, die Aktivierungseinrichtung und die Presseinrichtung vereinigt. Der in Fig. 14 dargestellte Legestempel 168 weist somit die Saugeinrichtung 158, die Heizeinrichtung 160 sowie die Presseinrichtung 162 mit der flexiblen Oberfläche 164 an dem elastischen Trägerelement 166 auf.

Fig. 15 zeigt eine Unteransicht auf die flexible Oberfläche 164.

Mit dem Legestempel 168 können bei der Fiber-Patch-Preforming Technologie (FPP) bebinderte und in definierte Geometrien geschnittene Faserstücke (Patches) entsprechend eines Legeplan (beispielsweise des in Fig. 11 wiedergegebenen Legeplans) positionsgenau abgelegt werden. Der Legestempel 168 ist eine zentrale Komponente der Ablegetechnik und kann auch in anderen geometrischen Variationen verwendet werden. Es sind z. B. quaderförmige oder rollenförmige Legestempel denkbar.

Bei dem konkreten Ausführungsbeispiel gemäß Fig. 14 ist der Legestempel 168 als Silikonstempel ausgebildet. Die Oberflächenanpassung des Silikonstempels ähnelt der Tampon-Drucktechnik. Jedoch erfolgt hier die entsprechende Anwendung auf einem technologisch völlig verschiedenem Gebiet.

Der Legestempel 168 ist in der Lage, Faserzuschnitte über eine integrierte Ansaugung - Saugeinrichtung 158 - schnell und schonend aufzunehmen und an einen definierten Ablageort zu transportieren. Während des Transports heizt eine in die Kontaktfläche - flexible Oberfläche 164 - integrierte Heizung - Heizeinrichtung 160 - das Material auf und aktiviert dadurch ein Bindemittel - Bindermaterial 38 - auf dem Faserzuschnitt. Der Faserzuschnitt wird auf die Oberfläche gepresst, wobei sich das weiche Stempelmaterial der Oberflächengeometrie anpasst. Wenn sich der Legestempel 168 von der Oberfläche entfernt, wird ein Abblasimpuls ausgelöst, das Bindermaterial 38 gekühlt, und das Fasermaterial verbleibt am Ablageort.

Der Legestempel 168 ermöglicht die Herstellung von Fiber-Patch-Preformen 42.

In der Fig. 14 ist das elastische Trägerelement 166 - elastischer Druckkörper - mit einer Luftverteilung 170 dargestellt, die Teil der Saugeinrichtung 158 ist. Der nicht dargestellte Teil der Saugeinrichtung 158 ist mit üblichen Pneumatikquellen und pneumatischen Steuerungen (nicht dargestellt) versehen. Weiter ist die flexible Oberfläche 164 als elastische Heizfläche 172 mit Ansaug- und Abblaskanälen 174 dargestellt.

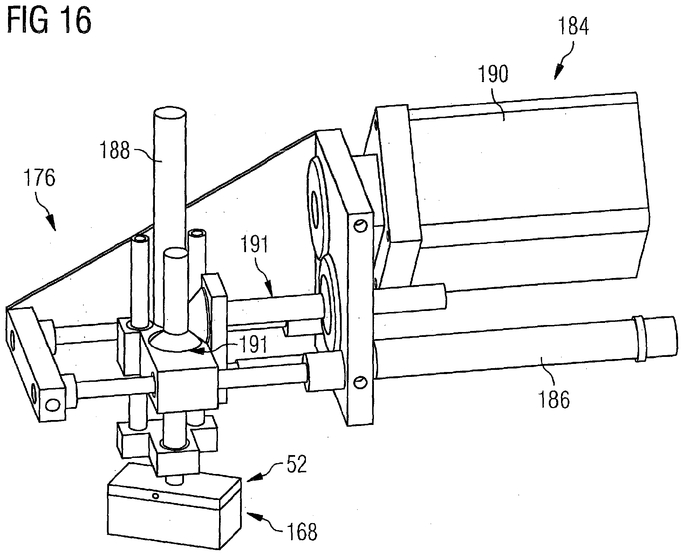

Das elastische Trägerelement 166 sitzt auf einer Kupplungsplatte 4, die mit lösbaren Befestigungselementen (nicht dargestellt) zur Befestigung des Legestempels 168 an einer Positioniereinrichtung 176 (siehe Fig. 16) versehen ist.

Weiter ist ein Thermoelement 178 als Steuerungsteil der Heizeinrichtung 160 vorgesehen. Eine hochflexible Stromleitung 180 verbindet das Thermoelement 178 mit der elastischen Heizfläche 172.

In Fig. 15 ist die Saugfläche - flexible Oberfläche 164 - mit den Ansaug- und Abblaskanälen 174 dargestellt.

Im Folgenden wird die Anwendung des Legestempels 168 sowie weitere Details der Legevorrichtung 28 anhand deren Verwendung in der Preform-Herstellvorrichtung 10 näher erläutert.

Bei der hier vorgestellten Fiber-Patch-Preforming-Technologie werden einzelne Faserpatches 40 zu einer dreidimensionalen Preform 42, 192 angeordnet. Hierzu setzt eine geeignete Legetechnik den Aufbauplan in die Realität um. Die Legevorrichtung 28 übernimmt die bebinderten und geschnittenen Faserpatches 40 vom Vakuumfließband 50, das der Schneidvorrichtung 24 zugeordnet ist, und platziert die Faserpatches 40 in möglichst schnellem Takt auf eine Oberfläche. In dem dargestellten Ausführungsbeispiel werden die Faserpatches 40, 40', 40" auf eine Oberfläche der Vorform 30 abgelegt.

Dabei sollen die Patches 40, 40', 40" zur Bildung einer stabilen Preform 42 auf die formgebende Oberfläche gepresst werden. Der Legestempel 168 soll dabei möglichst weich sein, um sich mit gleichmäßiger Kraft einer dreidimensionalen Oberfläche anpassen zu können. Weiter ist für die hier dargestellte Ausgestaltung vorteilhaft, dass kurz vor dem Ablegen eine bestimmte Wärmemenge zur Aktivierung des Bindermaterials 38 zur Verfügung gestellt werden kann. Hierfür ist die flexible Oberfläche 164 mit der Heizeinrichtung 160 ausgestattet, die die mechanischen Eigenschaften des Stempelmaterials möglichst wenig beeinflusst. Ähnlich wie bei dem Vakuumfließband 50 ist auch beim Legestempel 168 eine flächige Fixierung der filigranen Faserpatches 40 vorteilhaft. Hierfür hat die flexible Oberfläche 164 auch eine Ansaugfunktion.

Die Herstellung des Legestempels 168 lehnt sich an die Herstellung von Tampon-Druckstempel aus der Drucktechnik an. Für die Herstellung von Tampon-Druckstempel existieren eine Reihe von Spezialsilikonen, die den andauernden mechanischen Wechselbelastungen lange Zeit widerstehen können. Aus diesen Silikonen wird ein Silikonkautschuk ausgewählt, der den zusätzlichen Anforderungen, aufgrund der Heizeinrichtung 160 sowie des Kontakts mit Bindermaterial 38 möglichst gut entspricht. Da in den Legestempel 168 eine Heizung integriert wird, wurden Versuche zur Temperaturstabilität des Stempelmaterials gemacht. Es ist dabei vorteilhaft, wenn der Legestempel 168 Dauertemperaturen bis zu 200°C ertragen kann. Ein Weichmacher für den Silikonwerkstoff wird entsprechend diesen Anforderungen ausgewählt.

Um die Ablegefläche des Legestempels 168 beheizen zu können, sind verschiedene Heizeinrichtungen 160 einsetzbar. Es kommen z. B. elektrische Heizungen, Flüssigkeitskreisläufe oder Heißluft in Frage. Fertigungstechnisch am einfachsten ist die Variante einer elektrischen Heizeinrichtung 160 umzusetzen. Dies bietet gleichzeitig die Möglichkeit sehr hoher Heizleistungen mit exakter Temperatureinstellung.

Um die Flexibilität des elastischen Trägerelements 166 nicht zu beeinflussen, sind die Stromleitungen 180 vorteilhafterweise mittels eines Kohlenstoffasergarns gebildet. Die hohe Flexibilität eines solchen Garns führt nicht zu einer Versteifung der flexiblen Oberfläche 164. Weiter hält eine solche Faser auch mehrere 100.000 Lastzyklen aus.

Die Wärmeleitfähigkeit des elastischen Trägerelements 166 lässt sich durch Beimischung von Wärmeleitmitteln in das Silikon steigern.

Beispielsweise besitzt die flexible Oberfläche bei einem Wärmeleitmittel-Anteil von ca. 10-30 Gewichtsprozent eine ausreichende Wärmeleitfähigkeit, so dass ein Heizelement der Heizeinrichtung 160 und die flexible Oberfläche 164 auf annähernd gleicher Temperatur gehalten werden können.

In die flexible Oberfläche 164 des Legestempels 168 wurden die Ansaug- und Abblaskanäle 174 integriert, die im Inneren des Legestempels 168 über eine Kammer 182 zusammenführen. In der Kammer 168 ist ein Saugfließ (nicht dargestellt) eingelegt, welches ein Kollabieren beim Aufdrücken des Legestempels 168 verhindert.

Zur Vermeidung von elektrostatischen Aufladungen ist es vorteilhaft, wenn die flexible Oberfläche 164 aus einem flexiblen Material mit antistatischen Eigenschaften gebildet ist.

Im Folgenden wird noch anhand der Fig. 16 die Ablegemechanik der Legevorrichtung 28 näher erläutert.

Die in Fig. 16 wiedergegebene Legemechanik 184 dient zur Bewegung des Legestempels 168, um Faserpatches 40 von der Schneidvorrichtung 24 zur vordefinierten Position 46 zu transportieren. Die Legemechanik 184 erlaubt einen schnellen Legetakt und einen einstellbaren Ablegewinkel.

Wie zuvor erläutert, wird der Patch 40 berührungslos vom Vakuumfließband 50 auf den Legestempel 168 übergeben. Dazu löst die Steuerungsvorrichtung 44 nach einer eingestellten Verzögerungszeit in Abhängigkeit eines Schnittbefehls einen Abblasimpuls der Saug/Abblaskammer 144 des Vakuumfließbandes 50 aus. Der Patch 40 wird über einen wenige Millimeter (ca. 0,5 - 10 mm) Luftweg auf den saugenden Legestempel 168 übertragen. Danach beginnt der Bewegungsablauf der Legemechanik 184.

Die Legemechanik 184 weist einen ersten translatorischen Antrieb zum Transport des Legestempels 168 von der Aufnahmeposition zu einer Position oberhalb der vorgegebenen Position auf. Dieser erste Antrieb ist bei der dargestellten Ausführungsform der Legemechanik 184 als waagerechter Pneumatikzylinder 186 ausgeführt. Dieser waagerechte Pneumatikzylinder 186 kann den Legestempel 168 von seiner Aufnahmeposition über die Ablegestelle verschieben. Ein zweiter Antrieb, hier in Form eines senkrechten Pneumatikzylinders 188, presst den Legestempel 168, vorzugsweise mit einstellbarem Druck, auf die Oberfläche.

Während des Verschiebevorganges wird die Stempelfläche permanent auf einer einstellbaren Temperatur gehalten, damit der Binder seine Klebrigkeit aktivieren kann. Sobald der Patch 40 die Oberfläche berührt, kühlt das Bindermaterial 38 ab und wird fest. Gesteuert von der Steuerungsvorrichtung 44 wird dann ein Abblasimpuls in der Saugeinrichtung 158 des Legestempels 168 ausgelöst; der Legestempel löst sich hierdurch und fährt anschließend zurück in seine Ausgangsposition. Dabei sind die trennenden Eigenschaften des Silikons von Vorteil, weil kein Bindermaterial 38 am Stempel verbleibt.

Über einen dritten Antrieb, der bei dem Ausführungsbeispiel in Form eines Schrittmotors 190 mit Keilwellensystem 191 ausgebildet ist, kann der Legestempel 168 gedreht werden. Somit können auch Spuren aus schrägen Patches 40 erzeugt werden, ohne dass der gesamte Legekopf (z. B. Legestempel 168 mit Legemechanik 184) gedreht werden muss.

Um einen wirtschaftlichen Legeprozess zu erreichen, wurde eine sehr hohe Taktrate von mehr als zwei Legevorgängen pro Sekunde geplant. Beispielsweise werden fünf Legevorgänge pro Sekunde oder mehr durchgeführt. Bei einer Patchlänge von 60 mm und unter Verwendung eines 12k-Rovings, kommt man so zu einem theoretischen Faserdurchsatz von 14,4 gr/min. Möchte man beispielsweise einen Quadratmeter mit Faserpatches 40 in der Dicke eines Biaxialgeleges (ca. 500gr/qm) belegen, so würde die Preform-Herstellvorrichtung 10 dafür ca. 35 Minuten benötigen. Kürzere Zeiten können durch Verwendung von mehreren Legevorrichtungen 28, beispielsweise unter Verwendung von mehreren Robotern, erreicht werden, die gemeinsam an einer Oberfläche arbeiten.

Aufgrund der derzeit noch relativ niedrigen erreichbaren Geschwindigkeiten ist die FPP-Technik in der derzeit vorgestellten Form insbesondere für die Verstärkung anderer Preform-Typen sowie für dünnwandige und komplexe Bauteile geeignet. So ist z. B. an die Verstärkung von Lochrändern auf Mulitaxialgelegen oder Geweben zu denken. Ein Fenstertrichter, dessen Preform 192 in Fig. 13 dargestellt ist, würde sich ebenfalls sehr dünnwandig und mit definierter Faserlage herstellen lassen.

Für bestimmt Preformtypen werden weniger Freiheitsgrade an einer FPP-Anlage - Preform-Herstellvorrichtung 10 - benötigt. Sollen z. B. nur Verstärkungsprofile hergestellt werden, dann können die einzelnen Baugruppen vereinfacht und zu einer Produktionslinie zusammengefasst werden. Nicht verwendete Baugruppen können weggelassen werden, oder die Vorrichtung kann in mehrere Baueinheiten unter Zwischenlagerung des Halbzeugmaterials getrennt werden.

Dadurch können sowohl die Anlagenkosten gesenkt werden, als auch die Produktivität erhöht werden.

Die hier dargestellte Schneid- und Leggruppe 16 ist einerseits zum Bearbeiten von speziell mittels der Aufbereitungsgruppe 12 hergestellten aufgespreizten bebinderten trockenen Faserbändern als auch zum Verarbeiten von vorimprägnierten Halbzeug-Faserbändern 14, beispielsweise Prepreg- oder Thermoplastbändern geeignet. Prepreg- und Thermoplastbänder lassen sich prinzipiell genauso verarbeiten wie die bebinderten trockenen aufgespreizten Rovings. In allen drei Fällen wird die Klebrigkeit der Patches 40, 40', 40" durch Wärme aktiviert. Die einzelnen Verfahrensschritte der bevorzugten Ausgestaltungen der Verfahren sind identisch: Abrollen, Schneiden, Vereinzeln, Aufnehmen, Erwärmen und Ablegen (in der vorgenannten Reihenfolge).

Allerdings haben unterschiedlich verwendete Bindermaterialien unterschiedliche Aktivierungstemperaturen. Prepreg ist bereits bei Raumtemperatur (etwa 20°C) klebrig. Das in der Aufbereitungsgruppe bevorzugt verwendete Bindermaterial 38 entwickelt seine Klebrigkeit bei etwa 100°C bis etwa 120°C. Thermoplastmaterial, mit dem Thermoplastbänder vorimprägniert sind, liegt von der Termperatur in der Regel noch höher, was von der chemischen Struktur des verwendeten Thermoplasts abhängt.

In der Preform-Herstellvorrichtung 10 und insbesondere in deren Schneid- und Legegruppe 16 ist die Arbeitstemperatur oder Umgebungstemperatur durch wenigstens eine nicht näher dargestellte geeignete Temperatureinstelleinrichtung einstellbar. Diese Temperatureinstelleinrichtung kann dem Gebäude zugeordnet sein, in dem die Vorrichtung 10 und/oder die Schneid- und Legegruppe 16 steht.

Dadurch lasst sich bei der Verwendung unterschiedlicher Bindermaterialien sicherstellen, dass die Klebrigkeit erst auf dem Legestempel 168 aktiviert wird. Zum Beispiel wird bei der Verwendung von Prepreg die Umgebung klimatisiert. Insbesondere wird dann bei Kühltemperaturen unter 0°C, vorzugsweise bei Tiefkühltemperaturen unter 10°C, beispielsweise um etwa -18°C gearbeitet. Durch den beheizten Legestempel 168 wird das vorher tiefgekühlte Patch 40, 40', 40" dann auf etwa Raumtemperatur gebracht.

Der Legestempel 168 hat einen weiten Temperaturbereich von etwa Raumtemperatur oder darunter bis ca. 200°C. Solange ein Bindermaterial in diesem Bereich aktivierbar ist, ist es auch in der hier dargestellten Vorrichtung verarbeitbar.

### Bezugszeichenliste

- 10: Preform-Herstellvorrichtung
- 12: Aufbereitungsgruppe
- 14: Faserstrang
- 16: Schneid- und Legegruppe
- 18: Abrollvorrichtung
- 20: Spreizvorrichtung
- 22: Bebinderungsvorrichtung
- 24: Schneidvorrichtung
- 26: Transporteinrichtung
- 28: Legevorrichtung
- 30: Vorform
- 32: Roving
- 34: Spreizeinrichtung
- 36: Lockerungseinrichtung
- 38: Bindermaterial
- 40, 40', 40": Patch (Abschnitte von einem Faserband; Faserbandstücke)
- 42: Preform
- 44: Steuerungsvorrichtung
- 46: vordefinierte Position
- 48: Faserschneidwerk
- 50: Vakuumfließband
- 52: Legekopf
- 54: Laser
- 56: Vorratsspule
- 58: Lagerung
- 60: Linearführung
- 62: Schlitten
- 64: Antriebsspindel
- 66: Motor
- 68: Sensor
- 70: Position
- 72: Fotodiode
- 74: flaches Bändchen
- 75: Röllchen
- 76: gebogene Stange
- 78: gerade Stange
- 80: Spreizkante
- 82: erster radialer Vorsprung
- 84: Drehwelle
- 86: Drehwelle
- 88: zweiter radialer Vorsprung
- 90: geradlinige Kante
- 92: Zahnradgetriebe
- 94: Flügel
- 96: Saugkammer
- 98: laminarer Luftstrom
- 100: Filamente
- 102: Trichter
- 104: radiale Erhebungen
- 106: Walze
- 108: Ausbürstwalze
- 110: Elektromotor
- 112: Elektromotor
- 114: Steuereinrichtung
- 116: Halter
- 118: Heizeinrichtung
- 120: IR-Heizstrahler
- 122: Faserschneidwerk
- 124: Messereinrichtung
- 126: Gegenwalze
- 128: Förderwalze
- 130: Messerwalze
- 132: Messerkanten
- 134: Kupplungsschneidwerk
- 136: Messerbalken
- 138: Messerklinge
- 140: Saugkammer
- 142: Lochblech
- 144: Saug/Abblaskammer
- 146: Übergabeposition
- 148: gekrümmte Bahnen
- 150: überlappende Patches
- 152: Schneidkante
- 154: Schneidkante
- 156: Bewegbarkeit der Vorform - mehrdimensional -
- 158: Saugeinrichtung
- 160: Heizeinrichtung
- 162: Presseinrichtung
- 164: flexible Oberfläche
- 166: elastisches Trägerelement
- 168: Legestempel
- 170: Luftverteilung
- 172: elastische Heizfläche
- 174: Ansaug- und Abblaskanäle
- 175: Kupplungsplatte
- 176: Positioniereinrichtung
- 178: Thermoelement
- 180: Stromleitung
- 182: Kammer
- 184: Legemechanik
- 186: waagerechter Pneumatikzylinder (erster Antrieb)
- 188: senkrechter Pneumatikzylinder (zweiter Antrieb)
- 190: Schrittmotor (dritter Antrieb)
- 191: Keilwellensystem
- 192: Fenstertrichterpreform

## Patentansprüche

1. Verfahren zum Herstellen einer Preform (42) für eine kraftflussgerechte Faserverbundstruktur, mit der folgenden Reihenfolge von Schritten:
a) zur Verfügung Stellen eines flachen Faserbandes (14),
c) Abschneiden eines Faserbandstückes (40, 40', 40") von dem flachen Faserband (14),
e) Aufnehmen des Faserbandstückes (40, 40', 40") an einer vorgegebenen Aufnahmeposition mittels einer Legevorrichtung (28),
f) Platzieren des Faserbandstückes (40, 40', 40") an einer vordefinierten Position,
g) Fixieren des Faserbandstückes (40, 40', 40") mittels eines Bindermaterials (38),
wobei die Schritte c) bis f) zum Platzieren und Fixieren weiterer Faserbandstücke (40, 40', 40") an anderen vordefinierten Positionen wiederholt werden und wobei die Schritte e) und f) mittels eines Legekopfes (52) der Legevorrichtung (28) durchgeführt werden, der automatisch von der wenigstens einen Aufnahmeposition zu einer ersten vordefinierten Position zum Platzieren eines ersten Faserbandstückes (40) und zurück zu der oder einer von mehreren vorgegebenen Aufnahmepositionen zwecks Aufnahme eines zweitens Faserbandstückes (40') und dann zu einer zweiten vordefinierten Position zwecks Platzieren des zweiten Faserbandstückes (40') fährt.

2. Verfahren nach Anspruch 1,
**dadurch gekennzeichnet,**
**dass** ein durch Wärme aktivierbares Bindermaterial (38) verwendet wird und dass zum Durchführen des Schrittes g) das abgeschnittene Faserbandstück (40, 40', 40") erwärmt wird.

3. Verfahren nach einem der voranstehenden Ansprüche,
**dadurch gekennzeichnet,**
**dass** in Schritt c) zum Bilden des Faserbandstücks (40, 40', 40") ein Stück definierter Länge, vorzugsweise von weniger als ca. 20 cm, insbesondere weniger als ca. 10 cm abgeschnitten wird.

4. Verfahren nach einem der voranstehenden Ansprüche,
**dadurch gekennzeichnet,**
**dass** das Faserbandstück (40) während des Legevorganges pneumatisch an dem Legekopf (52) festgehalten wird und/oder dass in Schritt f) das platzierte Faserbandstück (40, 40', 40") mittels eines pneumatischen Impulses von dem Legekopf (52) gelöst wird.

5. Verfahren nach einem der voranstehenden Ansprüche,
**gekennzeichnet durch** den zwischen Schritt c) und Schritt e) durchzuführenden Schritt:
d) Transportieren des Faserbandsstückes (40, 40', 40") von einer zur Durchführung des Schritts c) verwendeten Schneidvorrichtung zu der Aufnahmeposition der Legevorrichtung.

6. Verfahren nach einem der voranstehenden Ansprüche,
**dadurch gekennzeichnet,**
**dass** in Schritt c) das Faserbandstück (40, 40', 40") jeweils entlang einer bogenförmigen Schnittlinie abgeschnitten wird.

7. Verfahren nach einem der voranstehenden Ansprüche,
**dadurch gekennzeichnet,**
**dass** Schritt a) umfasst
a1) Aufspreitzen eines Faserfilamentbündels (32) zu einem flachen Faserband (14).

8. Verfahren nach Anspruch 7,
**gekennzeichnet durch** den irgendwann zwischen Schritt a1) und Schritt f) durchzuführenden Schritt:
b) Anbringen des Bindermaterials (38) an Faserfilamente (100).

9. Verfahren nache einem der Ansprüche 1 bis 6,
**dadurch gekennzeichnet,**
**dass** Schritt a) umfasst:
a2) zur Verfügung Stellen eines flachen Faserbands (14) aus einem mit Bindermaterial vorimprägnierten Halbzeug.

10. Verwendung eines Verfahrens nach einem der voranstehenden Ansprüche zum Herstellen einer kraftflussgerechten Faserverbundstruktur, die mit der mittels des Verfahrens hergestellten Preform (42) aufgebaut wird.

11. Vorrichtung (10) zur Herstellung einer Preform (42) für eine kraftflussgerechte Faserverbundstruktur, wobei die Vorrichtung (10) mit einer Steuerung zur automatischen Durchführung des Verfahrens nach einem der voranstehenden Ansprüche ausgebildet ist und versehen ist mit:
einer Schneidvorrichtung (24) zum Schneiden eines flachen Faserbands (14) in mehrere Faserbandstücke (40, 40', 40"), wobei die Schneidvorrichtung (24) dazu ausgebildet ist, Faserbandstücke (40, 40', 40") von dem Faserband (14) abzuschneiden,
einer relativ zur Schneidvorrichtung beweglichen Legevorrichtung (28) zur Aufnahme einzelner Faserbandstücke (40, 40', 40") und Platzierung derselben an vordefinierten Positionen mit vorgegebener Orientierung
und einer Steuervorrichtung (44), die zur derartigen Steuerung der Legevorrichtung (28) ausgebildet ist, dass die Faserbandstücke (40, 40', 40") entlang vorgegebener Bahnen (148) orientiert ablegbar sind,
wobei die Legevorrichtung (28) einen Legekopf (52) aufweist, der gesteuert durch die Steuervorrichtung (44, 44b) von wenigstens einer vorgegebenen Aufnahmeposition (146) zu unterschiedlichen vordefinierten Positionen und zurück bewegbar ist, um die von der Schneidvorrichtung (24) geschnittenen Faserbandstücke (40, 40', 40") an der wenigstens einen Aufnahmeposition aufzunehmen und an den vordefinierten Positionen abzulegen.

12. Vorrichtung nach Anspruch 11,
**gekennzeichnet durch** eine Spreizvorrichtung (20) zum Aufspreizen wenigstens eines Rovings (32) zu einem flachen Faserband (14).

13. Vorrichtung nach einem der Ansprüche 11 bis 12,
**gekennzeichnet durch**
eine Bindematerialauftragsvorrichtung (22), mit der Bindermaterial (38) zum Fixieren der Faserbandstücke (40, 40', 40") auf Filamente (100) auftragbar ist.

14. Vorrichtung nach einem der Ansprüche 11 bis 13,
**gekennzeichnet durch** eine Transporteinrichtung (26), mittels der die abgeschnittenen Faserbandstücke (40, 40', 40") vereinzelbar und zu der Legevorrichtung (28) transportierbar sind.

15. Vorrichtung nach einem der Ansprüche 11 bis 14,
**gekennzeichnet durch** wenigstens eine Heizeinrichtung (160) zum Aktivieren des auf Filamenten (100) aufgetragenen Bindermaterials (38).

## Claims

1. Process for manufacturing a preform (42) for a load path aligned fiber composite structure, comprising the following order of steps:
a) providing a flat fiber band (14),
c) cutting off a fiber band piece (40, 40', 40") from the flat fiber band (14),
e) picking up the fiber band piece (40, 40', 40") at a predetermined pickup position by means of a laying device (28),
f) placing the fiber band piece (40, 40', 40") at a predefined position,
g) fixing the fiber band piece (40, 40', 40") by means of a binder material (38),
wherein the steps c) through f) are repeated for placing and fixing of additional fiber band pieces (40, 40', 40") at other predefined positions and wherein the steps e) and f) are carried out by means of a laying head (52) of the laying device (28) which automatically moves from the at least one pickup position to a first predefined position for the placement of a first fiber band piece (40) and back to said one or to one of several predetermined pickup positions for picking up a second fiber band piece (40') and then to a second predefined position for the placement of the second fiber band piece (40').

2. Process according to claim 1,
**characterized in that** a binder material (38) activated by heat is used and the cut-off fiber band piece (40, 40', 40") is heated for carrying out step g).

3. Process according to one of the preceding claims,
**characterized in that** in step c) for producing the fiber band piece (40, 40', 40") a piece of a defined length, preferably of less than about 20 cm and particularly of less than about 10 cm, is cut off.

4. Process according to one of the preceding claims,
**characterized in that** the fiber band piece (40) is pneumatically held against the laying head (52) during the laying operation and/or that in step f) the placed fiber band piece (40, 40', 40") is released from the laying head (52) by means of pneumatic pulse.

5. Process according to one of the preceding claims,
**characterized by** the step to be carried out between step c) and step e):
d) transferring the fiber band piece (40, 40', 40") from a cutting device used for carrying out step c) to the pickup position of the laying device.

6. Process according to one of the preceding claims,
**characterized in that**
in step c) the fiber band piece (40, 40', 40") is respectively cut along an arc-shaped cutting line.

7. Process according to one of the preceding claims,
**characterized in that** step a) comprises a1) spreading a bundle of fiber filaments (32) into a flat fiber band (14).

8. Process according to claim 7,
**characterized by** a step to be carried out anytime between step a1) and f):
b) applying the binder material (38) to the fiber filaments (100).

9. Process according to one of the claims 1 to 6,
**characterized in that** step a) comprises
a2) providing a flat fiber band (14) from a semi-product pre-impregnated with a binder material.

10. Use of a process according to one of the previous claims for manufacturing a load path aligned fiber composite structure constructed with a preform (42) manufactured by means of the process.

11. Device (10) for manufacturing a preform (42) for a load path aligned fiber composite structure, wherein the device (10) is provided with a controller for automatically performing the process according to one of the preceding claims, comprising:
a cutting device (24) for cutting a flat fiber band (14) into several fiber band pieces (40, 40', 40"), wherein the cutting device (24) is configured to cut off fiber band pieces (40, 40', 40") from the fiber band (14),
a laying device (28) movable relative to the cutting device, for picking up and placing individual fiber band pieces (40, 40', 40") with a predetermined orientation at a predefined position, and
a control device (44) configured for controlling the laying device (28) in such a manner that the fiber band pieces (40, 40', 40") can be placed oriented along predetermined paths (148),
wherein the laying device (28) comprises a laying head (52), which is controlled by the control device (44, 44b) to be movable from at least one predetermined pickup position (146) to different predefined positions and back, so as to pick up the fiber band pieces (40, 40', 40") cut by the cutting device (24) at the at least one pickup position and place the same at the predefined position.

12. Device according to claim 11,
**characterized by** a spreading device (20) for spreading at least one roving (32) to form a flat fiber band (14).

13. Device according to one of the claims 11 to 12,
**characterized by** a binder material impregnation device (22) adapted for applying binder material (38) to filaments (100), for fixing the fiber band pieces (40, 40', 40").

14. Device according to one of the claims 11 to 13,
**characterized by** a transfer device (26) by which the cut-off fiber band pieces (40, 40', 40") can be separated and transferred to the laying device (28).

15. Device according to one of the claims 11 to 14,
**characterized by** at least one heating device (160) for activating the binder material (38) applied to the filaments (100).

## Revendications

1. Procédé de fabrication d'une préforme (42) pour une structure composite en fibres adaptée à des flux de forces, présentant la succession suivante d'étapes consistant à :
a) mettre à disposition une bande de fibres plane (14),
c) couper un morceau de bande de fibres (40, 40', 40") à partir de la bande de fibres plane (14),
e) recevoir le morceau de bande de fibres (40, 40', 40") à une position de réception définie à l'aide d'un moyen de pose (28),
f) placer le morceau de bande de fibres (40, 40', 40") à une position prédéfinie,
g) fixer le morceau de bande de fibres (40, 40', 40") au moyen d'un matériau liant (38),
dans lequel on répète les étapes c) à f) pour placer et fixer d'autres morceaux de bande de fibres (40, 40', 40") à d'autres positions prédéfinies, et on effectue les étapes e) et f) au moyen d'une tête de pose (52) du moyen de pose (28), qui se déplace automatiquement de ladite au moins une position de réception jusqu'à une première position prédéfinie pour placer un premier morceau de bande de fibres (40), et en retour jusqu'à la ou l'une de plusieurs positions de réception définies afin de recevoir un second morceau de bande de fibres (40') et ensuite jusqu'à une seconde position prédéfinie afin de placer le second morceau de bande de fibres (40').

2. Procédé selon la revendication 1,
**caractérisé en ce que**
on utilise un matériau liant (38) thermoactivable, et **en ce que** pour effectuer l'étape g) on fait chauffer le morceau de bande de fibres (40, 40', 40") coupé.

3. Procédé selon l'une des revendications précédentes,
**caractérisé en ce que** dans l'étape c), pour former le morceau de bande de fibres (40, 40', 40"), on coupe un morceau d'une longueur définie, de préférence de moins d'environ 20 cm, en particulier de moins d'environ 10 cm.

4. Procédé selon l'une des revendications précédentes,
**caractérisé en ce que**
le morceau de bande de fibres (40) est retenu par voie pneumatique sur la tête de pose (52) pendant l'opération de pose, et/ou dans l'étape f) le morceau de bande de fibres (40, 40', 40") placé est détaché de la tête de pose (52) au moyen d'une impulsion pneumatique.

5. Procédé selon l'une des revendications précédentes,
**caractérisé par** une étape à effectuer entre l'étape c) et l'étape e) et consistant à :
d) transporter le morceau de bande de fibres (40, 40', 40") depuis un moyen de coupe, utilisé pour effectuer l'étape c), jusqu'à la position de réception du moyen de pose.

6. Procédé selon l'une des revendications précédentes,
**caractérisé en ce que**
dans l'étape c), le morceau de bande de fibres (40, 40', 40") est coupé le long d'une ligne de coupe en forme d'arc.

7. Procédé selon l'une des revendications précédentes,
**caractérisé en ce que**
l'étape a) consiste à
a1) écarter un faisceau de filaments de fibres (32) pour donner une bande de fibres plane (14).

8. Procédé selon la revendication 7,
**caractérisé par** l'étape à effectuer à un instant quelconque entre l'étape a1) et l'étape f) et consistant à :
b) appliquer le matériau liant (38) sur des filaments de fibres (100).

9. Procédé selon l'une des revendications 1 à 6,
**caractérisé en ce que**
l'étape a) comprend :
a2) la mise à disposition d'une bande de fibres plane (14) à partir d'un produit semi-fini pré-imprégné avec un matériau liant.

10. Utilisation d'un procédé selon l'une des revendications précédentes pour fabriquer une structure composite en fibres adaptée à des flux de forces, réalisée avec la préforme (42) fabriquée au moyen du procédé.

11. Dispositif (10) pour fabriquer une préforme (42) pour une structure composite en fibres adaptée à des flux de forces, le dispositif (10) étant réalisé avec une commande pour mettre en oeuvre automatiquement le procédé selon l'une des revendications précédentes, et comprenant :
un moyen de coupe (24) pour couper une bande de fibres plane (14) en plusieurs morceaux de bande de fibres (40, 40', 40"), le moyen de coupe (24) étant réalisé pour couper des morceaux de bande de fibres (40, 40', 40") à partir de la bande de fibres (14),
un moyen de pose (28) mobile par rapport au moyen de coupe et destiné à recevoir des morceaux de bande de fibres (40, 40', 40") individuels et à les placer à des positions prédéfinies avec une orientation définie,
et un moyen de commande (44) réalisé pour commander le moyen de pose (28) de telle sorte que les morceaux de bande de fibres (40, 40', 40") sont susceptibles d'être posés en étant orientés le long de traces déterminées (148),
dans lequel le moyen de pose (28) comprend une tête de pose (52) qui est mobile, en étant commandé par le moyen de commande (44, 44b), depuis au moins une position de réception définie (146) vers différentes positions prédéfinies, et en retour, afin de recevoir à ladite au moins une position de réception les morceaux de bande de fibres (40, 40', 40") coupés par le moyen de coupe (24) et de les poser aux positions prédéfinies.

12. Dispositif selon la revendication 11,
**caractérisé par** un moyen d'écartement (20) destiné à écarter au moins un roving (stratifil) (32) pour donner une bande de fibres plane (14).

13. Dispositif selon l'une des revendications 11 à 12,
**caractérisé par**
un moyen d'application de matériau liant (22) permettant d'appliquer le matériau liant (38) pour fixer les morceaux de bande de fibres (40, 40', 40") sur des filaments.

14. Dispositif selon l'une des revendications 11 à 13,
**caractérisé par** un moyen de transport (26) permettant d'individualiser les morceaux de bande de fibres (40, 40', 40") coupés et de les transporter jusqu'au moyen de pose (28).

15. Dispositif selon l'une des revendications 11 à 14,
**caractérisé par** au moins un moyen de chauffage (160) pour activer le matériau liant (38) appliqué sur des filaments (100).
